# EUROPEAN PATENT SPECIFICATION

(11) **EP 4 205 490 B1**
(45) Date of publication and mention of the grant of the patent: **03.01.2024**
(21) Application number: 21765735.2
(22) Date of filing: 25.08.2021
(51) Int. Cl.: H04W 74/00, H04W 72/0453

(54) **WIRELESS DEVICE, FIRST NETWORK NODE, AND METHODS PERFORMED THEREBY FOR HANDLING UPLINK COMMUNICATION TO A NETWORK NODE**
DRAHTLOSE VORRICHTUNG, ERSTER NETZWERKKNOTEN UND DAMIT DURCHGEFÜHRTE VERFAHREN ZUR HANDHABUNG VON UPLINK-KOMMUNIKATION AN EINEN NETZWERKKNOTEN
DISPOSITIF SANS FIL, PREMIER NOEUD DE RÉSEAU ET PROCÉDÉS RÉALISÉS PAR CELUI-CI POUR GÉRER UNE COMMUNICATION EN LIAISON MONTANTE VERS UN NOEUD DE RÉSEAU

(30) Priority: 26.08.2020 US 202063070362 P
(43) Date of publication of application: 05.07.2023
(73) Proprietor: Telefonaktiebolaget LM ERICSSON (PUBL), 16483 Stockholm (SE)
(72) Inventor: CHRISTOFFERSSON, Jan, 975 61 LULEÅ (SE); ENBUSKE, Henrik, 113 41 STOCKHOLM (SE); TIRRONEN, Tuomas, 00950 Helsinki (FI)
(74) Representative: Ericsson
(86) International application number: PCT/SE2021/050822
(87) International publication number: WO 2022/045949

(56) References cited:
- WO-A1-2020/068478
- US-A1- 2020 146 054

## Description

### TECHNICAL FIELD

The present disclosure relates generally to a wireless device, and methods performed thereby, for handling uplink communication to a network node. The present disclosure also relates generally to a first network node, and methods performed thereby, for handling uplink communication by the wireless device.

### BACKGROUND

Wireless devices within a wireless communications network may be e.g., User Equipments (UE), stations (STAs), mobile terminals, wireless terminals, terminals, and/or Mobile Stations (MS). Wireless devices are enabled to communicate wirelessly in a cellular communications network or wireless communication network, sometimes also referred to as a cellular radio system, cellular system, or cellular network. The communication may be performed e.g., between two wireless devices, between a wireless device and a regular telephone and/or between a wireless device and a server via a Radio Access Network (RAN) and possibly one or more core networks, comprised within the wireless communications network. Wireless devices may further be referred to as mobile telephones, cellular telephones, laptops, or tablets with wireless capability, just to mention some further examples. The wireless devices in the present context may be, for example, portable, pocket-storable, hand-held, computer-comprised, or vehicle-mounted mobile devices, enabled to communicate voice and/or data, via the RAN, with another entity, such as another terminal or a server.

The wireless communications network covers a geographical area which may be divided into cell areas, each cell area being served by a network node, which may be an access node such as a radio network node, radio node or a base station, e.g., a Radio Base Station (RBS), which sometimes may be referred to as e.g., gNB, evolved Node B ("eNB"), "eNodeB", "NodeB", "B node", Transmission Point (TP), or BTS (Base Transceiver Station), depending on the technology and terminology used. The base stations may be of different classes such as e.g., Wide Area Base Stations, Medium Range Base Stations, Local Area Base Stations, Home Base Stations, pico base stations, etc..., based on transmission power and thereby also cell size. A cell is the geographical area where radio coverage is provided by the base station or radio node at a base station site, or radio node site, respectively. One base station, situated on the base station site, may serve one or several cells. Further, each base station may support one or several communication technologies. The base stations communicate over the air interface operating on radio frequencies with the terminals within range of the base stations. The wireless communications network may also be a non-cellular system, comprising network nodes which may serve receiving nodes, such as wireless devices, with serving beams. In 3rd Generation Partnership Project (3GPP) Long Term Evolution (LTE), base stations, which may be referred to as eNodeBs or even eNBs, may be directly connected to one or more core networks. In the context of this disclosure, the expression Downlink (DL) may be used for the transmission path from the base station to the wireless device. The expression Uplink (UL) may be used for the transmission path in the opposite direction i.e., from the wireless device to the base station.

The standardization organization 3GPP is currently in the process of specifying a New Radio Interface called NR or 5G-Universal Terrestrial Radio Access (UTRA), as well as a Fifth Generation (5G) Packet Core Network, which may be referred to as Next Generation (NG) Core Network, abbreviated as NG-CN, NGC or 5G CN.

### Internet of Things (IoT)

The Internet of Things (IoT) may be understood as an internetworking of communication devices, e.g., physical devices, vehicles, which may also referred to as "connected devices" and "smart devices", buildings and other items-embedded with electronics, software, sensors, actuators, and network connectivity that may enable these objects to collect and exchange data. The loT may allow objects to be sensed and/or controlled remotely across an existing network infrastructure.

"Things," in the loT sense, may refer to a wide variety of devices such as heart monitoring implants, biochip transponders on farm animals, electric clams in coastal waters, automobiles with built-in sensors, DNA analysis devices for environmental/food/pathogen monitoring, or field operation devices that may assist firefighters in search and rescue operations, home automation devices such as the control and automation of lighting, heating, e.g. a "smart" thermostat, ventilation, air conditioning, and appliances such as washer, dryers, ovens, refrigerators or freezers that may use telecommunications for remote monitoring. These devices may collect data with the help of various existing technologies and then autonomously flow the data between other devices.

It is expected that in a near future, the population of loT devices will be very large. Various predictions exist, among which one assumes that there will be >60000 devices per square kilometer, and another assumes that there will be 1000000 devices per square kilometer. A large fraction of these devices are expected to be stationary, e.g., gas and electricity meters, vending machines, etc.

### Machine Type Communication (MTC)

Machine Type Communication (MTC) has in recent years, especially in the context of the Internet of Things (IoT), shown to be a growing segment for cellular technologies. An MTC device may be a communication device, typically a wireless communication device or simply user equipment, that may be understood to be a self and/or automatically controlled unattended machine and that may be understood to be typically not associated with an active human user in order to generate data traffic. An MTC device may be typically more simple, and typically associated with a more specific application or purpose, than, and in contrast to, a conventional mobile phone or smart phone. MTC may be understood to involve communication in a wireless communication network to and/or from MTC devices, which communication typically may be of quite different nature and with other requirements than communication associated with e.g. conventional mobile phones and smart phones. In the context of and growth of the loT, it is evident that MTC traffic will be increasing and thus needs to be increasingly supported in wireless communication systems.

### Small data transmission

NR supports Radio Resource Control (RRC)_INACTIVE state and UEs with infrequent, e.g., periodic and/or non-periodic, data transmission may be generally maintained by the network in the RRC_INACTIVE state. Until Rel-16, the RRC_INACTIVE state does not support data transmission. Hence, the UE may be understood to have to resume the connection, that is, move to RRC_CONNECTED state for any DL, mobile terminated (MT), and UL, mobile originated (MO), data. Connection setup and subsequently release to INACTIVE state may happen for each data transmission however small and infrequent the data packets may be. This results in unnecessary power consumption and signalling overhead.

Specific examples of small and infrequent data traffic may include the following use cases. For smartphone applications: a) traffic from Instant Messaging (IM) services, e.g., WhatsApp, QQ, WeChat etc, b) heartbeat/keep-alive traffic from IM/email clients and other apps, and c) push notifications from various applications. For non-smartphone applications: a) traffic from wearables, e.g., periodic positioning information etc, b) sensors, e.g., Industrial Wireless Sensor Networks transmitting temperature, pressure readings periodically or in an event triggered manner etc, c) smart meters and smart meter networks sending periodic meter readings. As noted in 3GPP TS 22.891, the NR system may be required to be efficient and flexible for low throughput short data bursts, support efficient signalling mechanisms, e.g. signalling may be less than payload and reduce signalling overhead in general.

Signalling overhead from INACTIVE state UEs for small data packets is a general problem and will become a critical issue with more UEs in NR not only for network performance and efficiency, but also for the UE battery performance. In general, any device that has intermittent small data packets in INACTIVE state may benefit from enabling small data transmission in INACTIVE.

The key enablers for small data transmission in NR, namely the INACTIVE state, 2-step, 4-step Random Access Channel (RACH) and configured grant type-1 have already been specified as part of Rel-15 and Rel-16.

In 3GPP Release 8, the Evolved Packet System (EPS) was specified. EPS is based on the Long-Term Evolution (LTE) radio network and the Evolved Packet Core (EPC). It was originally intended to provide voice and mobile broadband (MBB) services, but has continuously evolved to broaden its functionality. Since Release 13, NarrowBand loT (NB-loT) and LTE for machine type communication (LTE-M) are part of the LTE specifications and provide connectivity to massive machine type communications (mMTC) services.

In 3GPP Release 15, the first release of the 5G system (5GS) was specified. This is a new generation's radio access technology intended to serve use cases such as enhanced mobile broadband (eMBB), ultra-reliable and low latency communication (URLLC) and mMTC. 5G may be understood to comprise the New Radio (NR) access stratum interface and the 5G Core Network (5GC). The NR physical and higher layers may be understood to reuse parts of the LTE specification, and to that, add components that may be needed when motivated by new use cases. One such component may be the introduction of a sophisticated framework for beam forming and beam management to extend the support of the 3GPP technologies to a frequency range going beyond 6 GHz.

A new NR Release 17 Work Item (Wl) RP-193252 'New Work Item on NR small data transmissions in INACTIVE state' has been approved in 3GPP with the focus of optimizing the transmission for small data payloads by reducing the signaling overhead. The Wl contains the following objectives:

| | | |
|---|---|---|
| This work item enables small data transmission in RRC_INACTIVE state as follows: | | |
| - For the RRC J INACTIVE state: | | |
| | ∘ UL small data transmissions for RACH-based schemes, e.g., 2-step and 4-step RACH): | |
| | | ▪ General procedure to enable User Plane (UP) data transmission for small data packets from INACTIVE state, e.g., using MSGA or MSG3 [RAN2] |
| | | ▪ Enable flexible payload sizes larger than the Rel-16 Common Control Channel (CCCH) message size that is possible currently for INACTIVE state for MSGA and MSG3 to support UP data transmission in UL, actual payload size can be up to network configuration)[RAN2] |
| | | ▪ Context fetch and data forwarding, with and without anchor relocation, in INACTIVE state for RACH-based solutions [RAN2, RAN3] |
| | | Note 1: The security aspects of the above solutions should be checked with SA3 |
| | ∘ Transmission of UL data on pre-configured Physical Uplink Shared Channel (PUSCH) resources, e.g., reusing the configured grant type 1 - when Time Alignment (TA) is valid | |
| | | ▪ General procedure for small data transmission over configured grant type 1 resources from INACTIVE state [RAN2] |
| | | ▪ Configuration of the configured grant type1 resources for small data transmission in UL for INACTIVE state [RAN2] |

For NB-loT and LTE-M, similar signaling optimizations for small data have been introduced through Rel-15 Early Data Transmission (EDT) and Rel-16 Preconfigured Uplink Resources (PUR). Somewhat similar solutions may be expected for NR, with the difference that the Rel-17 NR Small Data may only to be supported for RRC INACTIVE state, may include also 2-step RACH based small data, and that it may need to also include regular complexity MBB UEs. Both support MO traffic only. More information may be found in TS 36.300, v. 16.2.0, where the procedures are described.

In case of EDT, the Random Access (RA) procedure may need used. In case of 4-step RA procedure, the small data may be transmitted in msg3, while if the 2-step RA procedure is used, the small data may be transmitted in msgA. A description of the Random Access procedures is given below.

### 4-step Random Access procedure

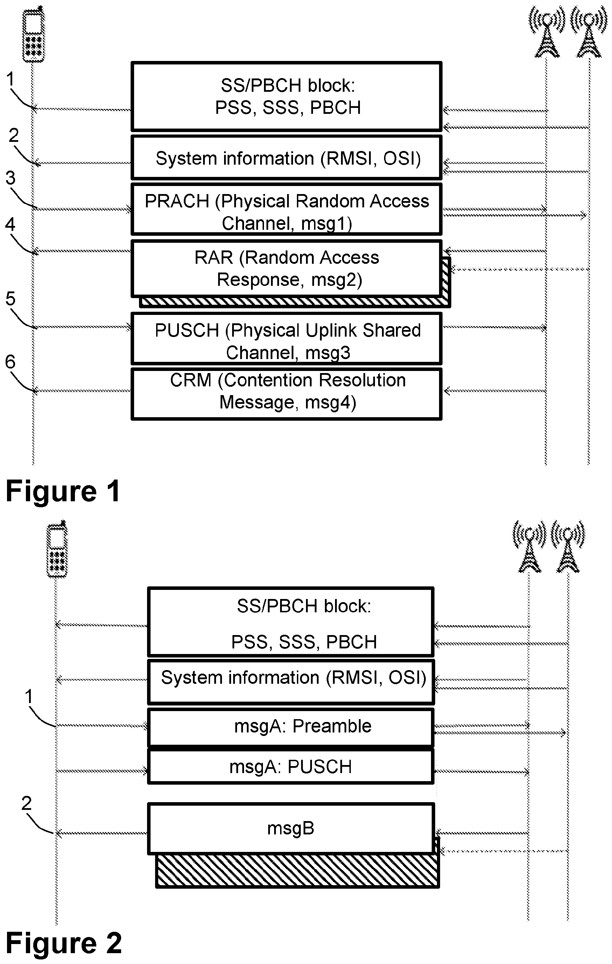

A 4-step approach may be used for the random-access procedure, see **Figure 1****.** In this approach, at **1,** the UE may detect synchronization signals (SSs), such as the Primary Synchronization Signal (PSS) and the Secondary Synchronization Signal (SSS), as well as the Physical Broadcast Channel (PBCH) Block, and at **2,** decode the broadcasted system information, such as the Remaining Minimum SI (RMSI) and Other SI (OSI), followed by at **3,** transmitting a Physical Random Access Channel (PRACH) preamble (message 1) in the uplink. The gNB may at **4,** reply with a Random Access Response (RAR), (message 2). The UE may then transmit at **5,** a UE identification (message 3) on PUSCH using an uplink grant, that is, an allocation of uplink transmission resources. At **5,** the gNB may then transmit a Contention Resolution Message (CRM), (message 4).

The UE may transmit message 3, on PUSCH, after receiving a timing advance command in the RAR, allowing PUSCH to be received with a timing accuracy within the cyclic prefix (CP). Without this timing advance, a very large CP would be needed in order to be able to demodulate and detect PUSCH, unless the system is applied in a cell with very small distance between UE and eNB. Since NR may also support larger cells with a need for providing a timing advance to the UE, the 4-step approach may be needed for random access procedure.

In rel-15 NR, the UE may indicate a Synchronization Signal Block (SSB). The purpose of this may be understood to be to let the gNB know which direction, for example, which DL beam to use, to transmit the RAR and subsequent messages. The SSB selection by the UE may be done by comparing the SS-Reference Signal Received Power (RSRP) to the rsrp-ThresholdSSB.

Once the SSB has been selected, the indication from UE to the gNB may be done by selection of preamble and/or PRACH occasion (RO) depending on the configuration. With the use of specific preambles and/or RO, the UE may implicitly indicate the selected SSB to the gNB.

In one extreme configuration, the indication may be done purely by the preamble, meaning that the preamble index may indicate the SSB irrespectively on which RO it may be transmitted. On the other extreme, the RO alone may indicate the SSB, irrespectively of preamble index. In a typical case, the indication may be a combination of these extremes: depending on which RO, the preamble index may indicate the SSB, meaning that a certain preamble index may indicate different SSBs depending on in which RO it may be transmitted.

The available number of SSBs, e.g., up to 64, may impact how the configuration of the resources may be done, and it may be observed that for a high number of available SSBs, indicating using only preamble identifier (id) may not be sufficient, since preamble ids may be needed also for contention free RA and SI requests. When several ROs are needed to indicate SSB, the latency of the RA procedure may increase latency, alternative give a large overhead in terms of configured ROs. Hence, when the number of available SSBs is high, preambles and ROs will be a scarce resource, and the RA configuration may be understood to have to balance the overhead in terms of PRACH resources with the latency and allocation of preambles to other things than SSB indication.

### 2-step Random Access procedure

With the 2-step procedure the random access may be understood to be completed in only two steps as illustrated in **Figure 2****.** The first two steps represented in Figure 2, which are unnumbered, correspond to steps 1 and 2 depicted in Figure 1.
Step 1: The UE may send a message A including a random access preamble together with higher layer data such as Radio Resource Control (RRC) connection request, possibly with some small payload on PUSCH, denoted "msgA PUSCH". The msgA PUSCH may be used for small data transmissions in inactive;
Step 2: The gNB may send a response called message B, which may be described as a modified RAR, including UE identifier assignment, timing advance information, and contention resolution message etc. In addition, message B (msgB) may contain a higher layer part. Similar to a RAR, a msgB may contain responses to multiple msgAs, and thus to multiple UEs, but the optional higher layer part may only pertain to one of the responses, that is, to one of the msgAs/UEs. If a response in a msgB does not have an associated higher layer part, this may be sent in a separate subsequent message, e.g. an RRC message, on the Physical Downlink Shared Channel (PDSCH).

The msgB may be understood as a response to msgA, which may contain contention resolution message(s), fallback indication(s) to schedule Msg3 transmission, and backoff indication.

The msgB may be understood as a response to msgA, which may contain responses to multiple UEs and with different kinds of information for different UEs depending on the outcome of the msgA transmission/reception, and the load on the access resources.

Upon a successful msgA reception, the gNB may include a successRAR Medium Access Control (MAC) sub Protocol Data Unit (subPDU) as a response for the concerned UE, where the successRAR MAC subPDU may include a contention resolution identity, a timing advance and a Cell Radio Network Temporary Identifier (C-RNTI) allocation. If the gNB successfully received the RACH preamble, but failed to receive msgA PUSCH, the gNB may respond to the concerned UE with a fallbackRAR MAC subPDU in the msgB. The fallbackRAR may be understood to turn the 2-step RA into a 4-step RA and consequently the fallbackRAR MAC subPDU may contain an UL grant, a timing advance and a temporary C-RNTI (TC-RNTI) allocation, but no contention resolution identity. The UE may use the UL grant to retransmit msgA PUSCH in the form of Msg3.

In addition to successRAR and fallbackRAR MAC subPDUs, the gNB may include a parameter which may be intended for the UEs that did not find any response to their respective msgA transmissions in msgB. This parameter may be the Backoff Indicator, a single parameter for all UEs which did not find their expected response in the msgB, which may be understood to control whether and how much a UE may be required to wait until it may attempt to access the network through random access again.

### Bandwidth Part (BWP)

The use of Bandwidth Parts (BWPs) has been standardized in 3GPP Rel-15 for NR. The reasons for using BWPs are that some UEs may not be able to use the entire Bandwidth (BW), in which case they may be assigned a smaller BWP which they may be capable of handling. Another reason may be understood to be for battery savings. A UE may be assigned a narrower BWP to reduce the needed energy for reception and transmission. Yet another reason may be for load balancing when the UEs may not need the entire BW to meet the bit rate requirements.

Each UE may be assigned with at least an initial BWP, the (same for all UEs, narrow enough for all UEs to handle, and a default BWP. The default BWP may be the same as the initial BWP but may also be different. That is, different UEs may typically have different default BWPs. In addition to initial and default BWP, the UE may be configured with additional BWPs. It has been agreed that a UE may have up to four Downlink (DL)/Uplink (UL) BWPs. The BWPs may be overlapping. An important agreement is also that at any point in time, only one BWP may be active for a specific UE.

The UE may be configured with BWPs using RRC signaling, except the initial which may be signaled in the SIB, and switching between BWPs may be done by Downlink Control Information (DCI) on the Physical Downlink Control Channel (PDCCH). There may be also a possibility to switch to the default BWP when the *bwp-InactivityTimer* may expire or when Random Access may be initiated if the active BWP does not have any RA resources.

A BWP may also be configured with PRACH occasions, allowing the UE to initiate a Random Access procedure on the BWP. The configuration of PRACH occasions on a BWP is not mandatory except on the initial BWP, where it may always be present to allow initial access. Also for Physical Uplink Control Channel(PUCCH), a BWP may or may not have PUCCH resources configured. The reason for not having a PUCCH configured may be that it may occupy resources which may lead to overhead, especially in configured but not active BWPs.

The BWP operation is specified in 38.321, v. 16.1.0, section 5.15. It specifies that
"A Serving Cell may be configured with one or multiple BWPs, and the maximum number of BWP per Serving Cell is specified in TS 38.213 [6].

The BWP switching for a Serving Cell may be used to activate an inactive BWP and deactivate an active BWP at a time. The BWP switching may be controlled by the PDCCH indicating a downlink assignment or an uplink grant, by the *bwp-InactivityTimer,* by RRC signalling, or by the MAC entity itself upon initiation of Random Access procedure. Upon RRC (re-)configuration of *firstActiveDownlinkBWP-Id* and/or *firstActiveUplinkBWP-Id* for SpCell or activation of a Secondary Cell (Scell), the DL BWP and/or UL BWP indicated by *firstActiveDownlinkBWP-Id* and/or *firstActiveUplinkBWP-Id* respectively, as specified in TS 38.331 [5]) may be active without receiving PDCCH indicating a downlink assignment or an uplink grant. The active BWP for a Serving Cell may be indicated by either RRC or PDCCH, as specified in TS 38.213 [6]. For unpaired spectrum, a DL BWP may be paired with a UL BWP, and BWP switching may be common for both UL and DL.

For each activated Serving Cell configured with a BWP, the MAC entity may be required to:
1. 1> if a BWP is activated:
   2> transmit on UL-Shared Channel (UL-SCH) on the BWP;
   2> transmit on RACH on the BWP, if PRACH occasions are configured;
   2> monitor the PDCCH on the BWP;
   2> transmit PUCCH on the BWP, if configured;
   2> report Channel State Information (CSI) for the BWP;
   2> transmit SRS on the BWP, if configured;
   2> receive DL-SCH on the BWP;
   2> (re-)initialize any suspended configured uplink grants of configured grant Type 1 on the active BWP according to the stored configuration, if any, and to start in the symbol according to rules in subclause 5.8.2.
2. 1> if a BWP is deactivated:
   2> not transmit on UL-SCH on the BWP;
   2> not transmit on RACH on the BWP;
   2> not monitor the PDCCH on the BWP;
   2> not transmit PUCCH on the BWP;
   2> not report CSI for the BWP;
   2> not transmit SRS on the BWP;
   2> not receive DL-SCH on the BWP;
   2> clear any configured downlink assignment and configured uplink grant of configured grant Type 2 on the BWP;
   2> suspend any configured uplink grant of configured grant Type 1 on the inactive BWP."

Existing methods to perform the RA procedure may reduce the available resources for transmissions in a wireless communications network, and may result in a degradation of the performance of the system.

WO 2020/068478 describes configuring a RACK procedure in a wireless communication network including selecting one of plural RACK procedure configurations for a radio communication device to employ to initiate access with the wireless communication network and communicating the selected RACK procedure configuration to the radio communication device. Two BWPs may be available during the RACK procedure. The RACK procedure messages may be transmitted in one BWP. In another BWP that is different than the BWP used for the RACK procedure messages, a UE transmits an early data transmission message containing uplink data to a RAN node.

US 2020146054 discloses that a base station may configure a wireless device with one or more BWPs. A base station may indicate, to a wireless device, which of the one or more configured BWPs is an active BWP. The wireless device may be configured for a cell with: a set of one or more BWPs for reception in a DL bandwidth by at least one parameter DL-BWP; and a set of one or more BWPs for transmissions in an UL bandwidth by at least one parameter UL-BWP. A first group of one or more candidate preamble groups may comprise Random Access Preambles (RAPs) indicated for small data transmissions. A second group may comprise RAPs indicated for larger data transmissions.

### SUMMARY

As part of the development of embodiments herein, one or more challenges with the existing technology will first be identified and discussed.

A bottleneck in the RA procedure is in the configuration of resources, e.g., ROs and preambles, to cater for all the things that may need to be indicated with the preamble transmission. In Release 16, preambles and ROs may be used to indicate preamble group A and B, for different size of data, 2-step or 4-step procedure, System Information (SI) request, SSB and Contention Free Random Access (CFRA). This may be understood to mean that there may easily be a shortage of preambles and ROs. For Small Data Transmission (SDT), 3GPP discussions propose to add additional preamble groups and/or specific RACH configurations to indicate SDT and UL data size. Adding additional preamble groups in the existing RACH configuration would be very difficult due to the already small number of available preambles. Adding an additional RACH configuration on the initial bandwidth part BWP would reduce the available resources for normal data transmissions and is questionable, and would result on degradation on the performance of the system.

It is an object of embodiments herein to improve the handling of uplink communication to a network node. It is a further particular object of embodiments herein to improve the handling of a random access procedure in a wireless communications network.

The present invention is defined in the appended independent claims. Particular realizations of the invention are defined in the appended dependent claims. According to claim 1, the object is achieved by a method, performed by a wireless device. The method is for handling uplink communication to a network node. The wireless device and the network node operate in a wireless communications network. The wireless device obtains a configuration from a first network node. The configuration configures the wireless device with a set of uplink time-frequency resources to perform random access for data transmission in inactive mode. A size of a buffer for the data transmission of the wireless device is smaller than a threshold. The set of uplink time-frequency resources are allocated in at least one second BWP. The at least one second BWP is different from a first BWP already allocated to the wireless device.

According to independent claim 12, the object is achieved by a method performed by the first network node. The method is for handling uplink communication to the network node. The wireless device and the first network node operate in a wireless communications network. The first network node provides the configuration to the wireless device. The configuration configures the wireless device with the set of uplink time-frequency resources to perform random access for data transmission in inactive mode. The size of the buffer for the data transmission of the wireless device is smaller than the threshold. The set of uplink time-frequency resources are allocated in the at least one second BWP. The at least one second BWP is different from the first BWP already allocated to the wireless device.

According to independent claim 19, the object is achieved by the wireless device. The wireless device is for handling uplink communication to the network node. The wireless device and the network node are configured to operate in the wireless communications network. The wireless device is further configured to obtain the configuration from the first network node. The configuration is configured to configure the wireless device with the set of uplink time-frequency resources to perform random access for data transmission in inactive mode. The size of the buffer for the data transmission of the wireless device is configured to be smaller than the threshold. The set of uplink time-frequency resources are configured to be allocated in the at least one second BWP. The at least one second BWP is different from the first BWP configured to be already allocated to the wireless device.

According to independent claim 21, the object is achieved by the first network node. The first network node is for handling uplink communication by the wireless device. The wireless device and the first network node are configured to operate in the wireless communications network. The first network node is further configured to the a configuration to the wireless device. The configuration is configured to configure the wireless device with the set of uplink time-frequency resources to perform random access for data transmission in inactive mode. The size of the buffer for the data transmission of the wireless device is configured to be smaller than the threshold. The set of uplink time-frequency resources are configured to be allocated in the at least one second BWP. The at least one second BWP is configured to be different from the first BWP configured to be already allocated to the wireless device.

By the first network node providing and the wireless device obtaining the configuration configuring the wireless device with the set of uplink time-frequency resources to perform random access for data transmission in inactive mode, the resources being allocated in the at least one second BWP, the wireless device is enabled to use new RA resources for data transmission, e.g., small data transmission, during inactive mode, without utilizing more of the time-frequency (T/F) resources available on the first BWP. This may be understood to avoid reducing the available resources for normal data transmissions and prevent degradation on the performance of the wireless communications network. Furthermore, obtaining the configuration may be understood to be particularly valuable to enable more granular RACH configurations for small data transmission, such as SDT.

### BRIEF DESCRIPTION OF THE DRAWINGS

Examples of embodiments herein are described in more detail with reference to the accompanying drawings, according to the following description.
- Figure 1: is a schematic diagram illustrating a 4-step random access procedure, according to existing methods.
- Figure 2: is a schematic diagram illustrating a two-step initial access procedure, according to existing methods.
- Figure 3: is a schematic diagram an example of a wireless communications network, according to embodiments herein.
- Figure 4: is a flowchart depicting a method in a wireless device, according to embodiments herein.
- Figure 5: is a flowchart depicting a method in a first network node, according to embodiments herein.
- Figure 6: is a schematic diagram illustrating an example of 2-step configurations on initial BWP and a 2nd BWP for SDT, according to embodiments herein.
- Figure 7: is a schematic diagram illustrating an example of 2-step PRACH configurations with different periodicities for SDT and normal RA, according to embodiments herein.
- Figure 8: is a schematic block diagram illustrating two embodiments, in panel a) and panel b), of a wireless device, according to embodiments herein.
- Figure 9: is a schematic block diagram illustrating two embodiments, in panel a) and panel b), of a first network node, according to embodiments herein.
- Figure 10: is a schematic block diagram illustrating a telecommunication network connected via an intermediate network to a host computer, according to embodiments herein.
- Figure 11: is a generalized block diagram of a host computer communicating via a base station with a user equipment over a partially wireless connection, according to embodiments herein.
- Figure 12: is a flowchart depicting embodiments of a method in a communications system including a host computer, a base station and a user equipment, according to embodiments herein.
- Figure 13: is a flowchart depicting embodiments of a method in a communications system including a host computer, a base station and a user equipment, according to embodiments herein.
- Figure 14: is a flowchart depicting embodiments of a method in a communications system including a host computer, a base station and a user equipment, according to embodiments herein.
- Figure 15: is a flowchart depicting embodiments of a method in a communications system including a host computer, a base station and a user equipment, according to embodiments herein.

### DETAILED DESCRIPTION

Certain aspects of the present disclosure and their embodiments may provide solutions to the challenges discussed in the Summary section, or other challenges. Embodiments herein may be generally understood to relate to different aspects of random access for transmissions of small data, wherein a size of a buffer for data transmission, e.g., uplink communication, may be smaller than a threshold. Particular embodiments herein may be understood to relate to different aspects of random access on non-initial BWP for SDT.

As a summarized overview, according to embodiments herein, an additional RACH configuration on a non-initial BWP to be used for SDT in inactive mode may be added. Since RA may only be allowed on the initial BWP for an inactive UE, this may require changes to the RA procedure and standard. The new RACH configuration may be limited to only be used for SDT transmissions and, e.g., for certain UE categories, while other RA triggers for inactive UEs may use the normal RACH configuration on the initial BWP. This RACH configuration may allow different settings, e.g., preamble group thresholds, e.g., msgA PUSCH sizes, and periodicity, that is, how often a PRACH resource may be available, than the RACH configuration on the initial BWP, which may allow the new RACH configuration to be better tuned for SDT. The RAR, the PDCCH scheduling the RAR, or msgB may be configured to be sent either on the initial BWP, or on the new BWP. The gNB may also indicate if the UE may be required to remain on the initial BWP or in the new non-initial BWP. Furthermore, the configuration of the SDT RACH resources may be saved in the UEs context when the UE may go to inactive.

Some of the embodiments contemplated will now be described more fully hereinafter with reference to the accompanying drawings, in which examples are shown. In this section, the embodiments herein will be illustrated in more detail by a number of exemplary embodiments. Other embodiments, however, are contained within the scope of the subject matter disclosed herein. The disclosed subject matter should not be construed as limited to only the embodiments set forth herein; rather, these embodiments are provided by way of example to convey the scope of the subject matter to those skilled in the art. It should be noted that the exemplary embodiments herein are not mutually exclusive. Components from one embodiment may be tacitly assumed to be present in another embodiment and it will be obvious to a person skilled in the art how those components may be used in the other exemplary embodiments.

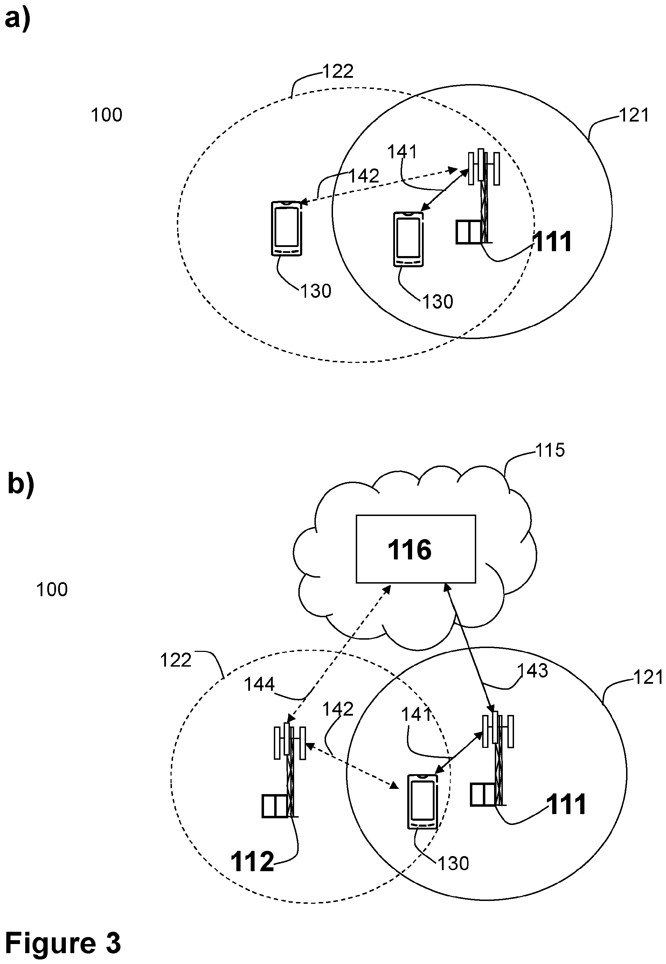

**Figure 3** depicts two non-limiting examples of a wireless network or **wireless communications network 100,** sometimes also referred to as a wireless communications system, cellular radio system, or cellular network, in which embodiments herein may be implemented. The wireless communications network 100 may be a 5G system, 5G network, or Next Gen System or network. In other examples, the wireless communications network 100 may, in addition, support other technologies such as, for example, Long-Term Evolution (LTE), e.g. LTE-M, LTE Frequency Division Duplex (FDD), LTE Time Division Duplex (TDD), LTE Half-Duplex Frequency Division Duplex (HD-FDD), LTE operating in an unlicensed band, such as LTE LAA, eLAA, feLAA and/or MulteFire. The wireless communications network 100 may typically be support MTC, eMTC, loT and/or NB-loT. Yet in other examples, the wireless communications network 100 may support other technologies such as, for example Wideband Code Division Multiple Access (WCDMA), Universal Terrestrial Radio Access (UTRA) TDD, Global System for Mobile communications (GSM) network, GSM/Enhanced Data Rates for GSM Evolution (EDGE) Radio Access Network (GERAN) network, Ultra-Mobile Broadband (UMB), EDGE network, network comprising of any combination of Radio Access Technologies (RATs) such as e.g. Multi-Standard Radio (MSR) base stations, multi-RAT base stations etc., any 3rd Generation Partnership Project (3GPP) cellular network, WiFi networks, Worldwide Interoperability for Microwave Access (WiMax), or any cellular network or system. Thus, although terminology from 5G/NR and/or LTE may be used in this disclosure to exemplify embodiments herein, this should not be seen as limiting the scope of the embodiments herein to only the aforementioned system.

The wireless communications network 100 may comprise a plurality of network nodes, whereof a **first network node 111,** which may be referred to simply as a network node 111, is depicted in the non-limiting examples of panels a) and b) in Figure 3. In some non-limiting examples, such as that in panel b) of Figure 3, the wireless communications network 100 may further comprise **second network node 112.** Any of the first network node 111 and the second network node 112 may be a radio network node. That is, a transmission point such as a radio base station, for example a gNB, an ng-NB, an eNB, an eNodeB, or a Home Node B, a Home eNode B, or any other network node with similar features capable of serving a user equipment, such as a wireless device or a machine type communication device, in the wireless communications network 100. In some examples, any of the first network node 111 and the second network node 112 may be a distributed node and may partially perform its functions in collaboration with a **virtual node 116** in a **cloud 115,** as depicted in the non-limiting example of panel b) in Figure 3. In some examples, the first network node 111 may be the same node as the second network node 112. In other examples, the first network node 111 may be a different node than the second network node 112. Any reference herein to a **network node 111, 112** may be understood to refer to any of the first network node 111 and the second network node 112.

The wireless communications network 100 may cover a geographical area, which in some embodiments may be divided into cell areas, wherein each cell area may be served by a radio network node, although, one radio network node may serve one or several cells. The wireless communications network 100 comprises a **first cell 121.** In some embodiments, the wireless communications network 100 may further comprise a **second cell 122.** In the non-limiting example of Figure 3, the first network node 111 serves the first cell 121, which may be also referred to as a serving cell or a current cell. The second cell 122, which may be referred to as a new cell, may be served also by the first network node 111 as in the non-limiting example of Figure 3 a), or by the second network node 112 in the non-limiting example of Figure 3 b). Any of the first network node 111 and the second network node 112 may be of different classes, such as, e.g., macro eNodeB, home eNodeB or pico base station, based on transmission power and thereby also cell size. In some examples, any of the first cell 121 and the second cell 122 may be beams, that is, any of the first network node 111 and the second network node 112 may serve receiving nodes with serving beams. Any of the first network node 111 and the second network node 112 may support one or several communication technologies, and its name may depend on the technology and terminology used. Any of the first network node 111 and the second network node 112 may be directly connected to one or more core networks.

A plurality of wireless devices may be located in the wireless communication network 100, whereof a **wireless device 130,** is depicted in the non-limiting examples of Figure 3. The wireless device 130 comprised in the wireless communications network 100 may be a wireless communication device such as a 5G UE, or a UE, which may also be known as e.g., mobile terminal, wireless terminal and/or mobile station, a mobile telephone, cellular telephone, or laptop with wireless capability, just to mention some further examples. Any of the wireless devices comprised in the wireless communications network 100 may be, for example, portable, pocket-storable, hand-held, computer-comprised, or a vehicle-mounted mobile device, enabled to communicate voice and/or data, via the RAN, with another entity, such as a server, a laptop, a Personal Digital Assistant (PDA), or a tablet, Machine-to-Machine (M2M) device, a sensor, loT device, MTC device, NB-loT device, device equipped with a wireless interface, such as a printer or a file storage device, modem, or any other radio network unit capable of communicating over a radio link in a communications system. The wireless device 130 comprised in the wireless communications network 100 may be enabled to communicate wirelessly in the wireless communications network 100. The communication may be performed e.g., via a RAN, and possibly the one or more core networks, which may comprised within the wireless communications network 100.

The wireless device 130 may be configured to communicate within the wireless communications network 100 in the first cell 121 with the first network node 111 over a **first link 141,** e.g., a radio link. The wireless device 130 may be configured to communicate within the wireless communications network 100 in the second cell 122 over a **second link 142,** e.g., a radio link. The second link 142 may be understood to be between the wireless device 130 and the network node serving the second cell 122, e.g., the first network node 111, as depicted in panel a), or the second network node 112, as depicted in panel b). The first network node 111 may be configured to communicate within the wireless communications network 100 with the virtual network node 116 over a **third link 143,** e.g., a radio link or a wired link. The second network node 112 may be configured to communicate within the wireless communications network 100 with the virtual network node 116 over a **fourth link 144,** e.g., a radio link or a wired link.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

In general, the usage of "first", "second", "third", "fourth", etc.. herein may be understood to be an arbitrary way to denote different elements or entities, and may be understood to not confer a cumulative or chronological character to the nouns they modify, unless otherwise noted, based on context.

Several embodiments are comprised herein. It should be noted that the examples herein are not mutually exclusive. Components from one embodiment may be tacitly assumed to be present in another embodiment and it will be obvious to a person skilled in the art how those components may be used in the other exemplary embodiments.

Some embodiments herein will now be further described with some non-limiting examples.

In the following description, any reference to a/the UE, or simply "UE" may be understood to equally refer the wireless device 130; any reference to a/the gNB, a/the NW and/or a/the network may be understood to equally refer to the first network node 111.

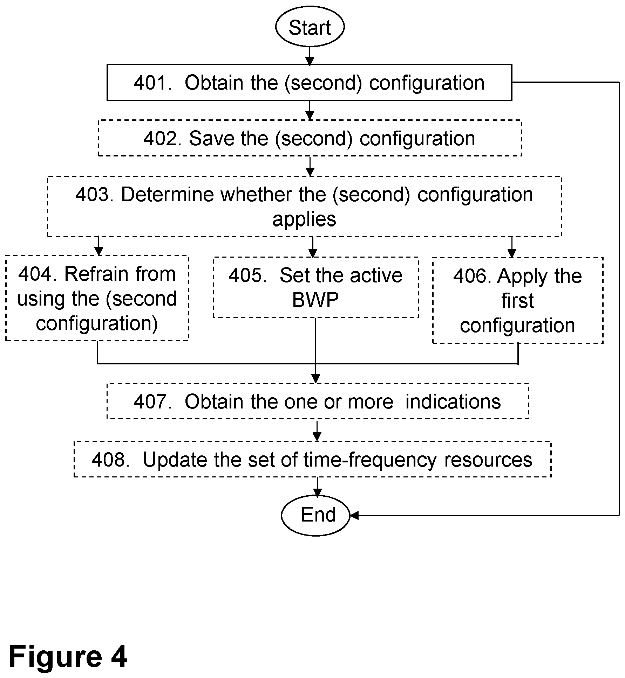

Embodiments of a method, performed by the wireless device 130, will now be described with reference to the flowchart depicted in **Figure 4****.** The method may be understood to be for handling uplink communication to a network node 111, 112, such as the first network node 111. The wireless device 130 and the network node 111, 112 operate in the wireless communications network 100. The method may be understood to be computer-implemented.

Uplink communication may comprise uplink transmission of data.

In some embodiments, a size of a buffer of the wireless device 130 for the uplink communication may be smaller than a threshold. This may be understood to mean that the data comprised in the uplink communication may be "Small Data".

The data may be user plane data.

In some embodiments, the wireless communications network 100 may support at least one of: New Radio (NR), Long Term Evolution (LTE), LTE for Machines (LTE-M), enhanced Machine Type Communication (eMTC), and Narrow Band Internet of Things (NB-loT).

The method may comprise one or more of the following actions.

Several embodiments are comprised herein. In some embodiments all the actions may be performed. In some embodiments, one or more actions may be performed. It should be noted that the examples herein may be not mutually exclusive. One or more embodiments may be combined, where applicable. All possible combinations are not described to simplify the description. Components from one embodiment may be tacitly assumed to be present in another embodiment and it will be obvious to a person skilled in the art how those components may be used in the other exemplary embodiments. A non-limiting example of the method performed by the wireless device 130 is depicted in Figure 4. Some actions may be performed in a different order than that shown in Figure 4. In Figure 4, optional actions are represented with dashed lines.

### Action 401

In this Action 401, the wireless device 130 obtains a configuration from the first network node 111. The configuration configures the wireless device 130 with a set of uplink time-frequency resources to perform random access for data transmission in inactive mode, e.g., RRC inactive mode. That is, the configuration configures the wireless device 130 with the set of uplink time-frequency resources to be used by the wireless device 130 to perform random access for data transmission in inactive mode. A size of a buffer for the data transmission, or uplink communication, of the wireless device 130 is smaller than a threshold. That the size of the buffer for the data transmission of the wireless device 130 is smaller than the threshold may be understood to mean that e.g., the data may be small data. That is, the transmission may be a e.g., a Small Data Transmission (SDT). The set of uplink time-frequency resources are allocated in at least one second bandwidth part (BWP), also referred to as second bandwidth part (BWP), or non- initial bandwidth part. The at least one second BWP is different from a first BWP already allocated to the wireless device 130, also referred to as first bandwidth part, or an initial bandwidth part.

The first bandwidth part may have been allocated in a first configuration, e.g., by the first network node 111. The configuration obtained by the wireless device 130 in this Action 401 may be referred to herein as a second configuration, or as the (second) configuration. Any reference to "the configuration" in the description of this method may be understood to refer to the second configuration.

Obtaining in this Action 401 may comprise receiving, e.g., from the first network node 111, e.g., via the first link 141, or retrieving or fetching from a memory.

The inactive state may be, e.g., as defined in 5G or in a younger system having equivalent functionality.

The time-frequency resources may be, e.g., ODFM symbols.

In some embodiments, the obtaining in this Action 401 may be while the wireless device 130 is in connected mode, e.g., RRC connected mode.

In some examples, the obtaining 401 may be performed in a first cell, e.g., the first cell 121.

The second BWP may or may not overlap the initial BWP.

In some embodiments, the at least one second BWP may comprise a plurality of second BWPs. The set of uplink time-frequency resources may comprise different sub-sets of uplink time-frequency resources. Each of the sub-sets of uplink time-frequency resources may be allocated in a respective second BWP of the plurality of second BWPs

By obtaining the (second) configuration in this Action 401, the first network node 111 may configure RA resources on a different (2nd) BWP, than the initial BWP which may have been used for initial access, devoted for SDT in inactive mode, while the wireless device 130 may be in connected mode.

The (second) configuration may have a different periodicity than the first configuration and may comprise an offset with respect to a periodicity of the first configuration.

In an example, the RACH configuration, such as the Ros, on the second BWP may be related to the RACH configuration on the initial BWP. This may be achieved by introducing a frequency offset relative the ROs on the initial BWP. In a similar way, the periodicity of the ROs in the non-initial BWP may be related to the ROs configuration on the initial BWP. This may be achieved in a similar way by introducing a time offset relative to e.g., the first RO in the PRACH configuration period on the initial BWP.

The obtaining in this Action 401 may be in one of: dedicated RRC signalling, and system information signalling.

The (second) configuration may be sent as dedicated RRC signaling to the connected wireless device 130, but since the same SDT resources may be expected to be used for all wireless devices, e.g., UEs, in the cell, it may also be sent in e.g., system information, containing other configuration related to SDT.

Since the (second) configuration typically may be cell specific, that is, all inactive UEs in the cell, e.g., the first cell 121, may use the same configuration for SDT, it may be difficult if the inactive wireless device 130 changes to a cell, e.g., the second cell 122, with a different configuration. Therefore, the System Information (SI) may include an identifier of the second RACH configuration, so that a UE may check if the new cell has configured the same RACH resources for SDT. Accordingly, in some embodiments, the obtaining in this Action 401 may be in system information, and the (second) configuration may indicate, e.g., comprise, an identifier of the (second) configuration.

This identifier may e.g. be a checksum computed over a specified set of the PRACH configuration parameters, or an identifier identifying the used RACH resource configuration from a specified list of possible RACH configurations. Alternatively, the second RACH configuration may be sent in SI so the wireless device 130, in case it moves to a different cell, e.g., the second cell 122, may use the second RACH configuration in the new cell, e.g., the second cell 122.

In a Random Access (RA) procedure for SDT, if RA resources are configured on a non-initial BWP for SDT for inactive UEs, the wireless device 130 may, when a RA procedure for SDT may be triggered in the same cell where the wireless device 130 was when transiting to inactive, set the active UL BWP to the 2nd BWP with RA resources for SDT.

Then upon initiating the RA procedure for SDT, the DL BWP may be switched to the BWP with the same id as the active UL BWP, according to legacy procedure.

Enabling SDT on non-initial BWP, if configured for an SpCell, may be done using a field in an RRC IE, this field may contain the ID of the UL BWP to be activated upon performing SDT. If the field is absent, the RRC reconfiguration may not impose a BWP switch (corresponds to L1 parameter 'active-BWP-UL-Pcell'). If configured for an SCell, this field may contain the ID of the uplink bandwidth part to be used upon MAC-activation for of an SCell. The SDT bandwidth part may be referred to by BandiwdthPartld = xx.

This means an example of the algorithm may be as follows:
If SDT is triggered in Inactive state
If SDT BWP configured = true, BandiwdthPartld = xx
Set Active BWP for UL = BandiwdthPart-ld (xx)if PRACH occasions (for SDT) are configured for the active UL BWP
   For UL,set the active UL BWP = the configured UL BWP
   For DL,
      if the Serving Cell is a SpCell:
set the active DL BWP = DL BWP with the same bwp-ld as the active UL BWP.Perform RACH procedure with the active BWP selected as above

By the wireless device 130 obtaining the configuration from the first network node 111, the wireless device 130 may be enabled to use new RA resources for data transmission, e.g., small data transmission, during inactive mode, without utilizing more of the time-frequency (T/F) resources available on the first BWP. This may be understood to avoid reducing the available resources for normal data transmissions and prevent degradation on the performance of the wireless communications network 100. Furthermore, obtaining the configuration may be understood to be particularly valuable to enable more granular RACH configurations for small data transmission, such as SDT.

### Action 402

In some of such embodiments, in this Action 402, the wireless device 130 may save the configuration in a UE context of the wireless device 130.

In some examples, this Action 402 may be performed where after the obtaining in Action 401, the wireless device 130 may be moved to inactive state/mode e.g., RRC inactive mode.

The wireless device 130 may perform this Action 402, e.g., after the obtaining 401, when the wireless device 130 may be moved to inactive mode. That is, when the wireless device 130 may be moved to inactive state, this second configuration may be saved in the UEs context. This may be understood to mean that the wireless device 130 and the first network node 111 may save the configuration when entering inactive mode, and the wireless device 130 may use the configuration when starting a RA procedure, e.g., at a later time point.

### Action 403

In some embodiments, the obtaining in Action 401 may have been performed in a first cell, e.g., the first cell 121, and the wireless device 130 may have entered the new, or second, cell 122. In some of such embodiments, in this Action 403, the wireless device 130 may determine whether or not the (second) configuration applies in the second cell 122.

Determining in this Action 403 may comprise calculating, deriving, etc.

The determining in this Action 403 may comprise determining whether or not the (second) configuration may apply in a new, or second cell, e.g., the second cell 122.

In case the wireless device 130 has changed cell after receiving the second configuration, that is, the RACH configuration for SDT, then if the wireless device 130 may determine that the same configuration for SDT is valid in the new cell, the wireless device 130 may set the active UL BWP to the BWP with RA resources for SDT when an RA procedure may be triggered for SDT in the new cell. If the wireless device 130 cannot determine that the previously received RACH configuration is valid in the new cell, the wireless device 130 may use the RACH resources on the initial BWP.

Further, it may be indicated in SI if UEs may be allowed to use RACH resources configured on non-initial BWPs for SDT. It may also be indicated in SI which RACH resources the wireless device 130 may use on non-initial BWPs.

In case the RACH configuration on the non-initial BWP may be determined by an offset to the initial BWP, this offset may always be relative the initial BWP in the UEs current cell.

By determining whether or not the (second) configuration applies in the second cell 122 in this Action 403, the wireless device 130 may be enabled to only apply the configuration when applicable, and not when not applicable in the second cell 122 so that the wireless device 130 may perform random access for data transmission in inactive mode using the time-frequency resources that may enable the second network node 112 serving the second cell 122 to decode any UL data transmission performed in inactive mode in the second cell 122 correctly.

### Action 404

In some embodiments, the wireless device 130 may determine in Action 403 that the (second) configuration is not to be applied in the second cell 122, e.g., does not apply, in the new, second cell 122, and the method may further comprise, that the wireless device 130, in this Action 404, may refrain from using the configuration in the second cell 122.

Refraining may be understood as not performing, or avoiding the performance of.

The refraining in this Action 404 may be from using the new, (second) configuration in the new, second cell 122. The (second) configuration may be e.g., stored in the UE context.

In some examples, this Action 404 may be performed wherein, the wireless device 130 may have determined that the configuration is not to be applied.

In other words, in the case the RACH configuration may be different in the new cell, e.g., the second cell 122, the wireless device 130, and e.g., a gNB/network such as the second network node 112, may be required to not use the configuration stored in the UE context, from the previous cell, e.g., the first cell 121, but instead use the configuration used in the new cell, provided e.g., using the methods described above. The new configuration may be stored in the UE context.

By refraining from using the configuration in the second cell 122 after the wireless device 130 may have determined that the (second) configuration is not to be applied in the second cell 122, the wireless device 130 may be enabled to avoid performing random access for data transmission in inactive mode in the second cell 122 using the wrong configuration, and avoid that the second network node 112 serving the second cell 122 may be unable to decode any UL data transmission performed in inactive mode in the second cell 122.

### Action 405

In some embodiments, the wireless device 130 may determine in Action 403 that the (second) configuration applies in the second cell 122, and the method may further comprise, that the wireless device 130, in this Action 405, may set the second BWP as active BWP when a random access procedure may be triggered for data transmission, wherein the size of the buffer for the further data transmission of the wireless device 130 may be smaller than the threshold. That is, wherein the further transmission of the wireless device 130 may be , for example, for small data transmission, e.g., am SDT.

The setting in this Action 405 may be of an active BWP to the second BWP.

By setting the second BWP as active after the wireless device 130 may have determined that the (second) configuration applicable in the second cell 122, the wireless device 130 may be enabled to only apply the configuration when applicable, so that the wireless device 130 may perform random access for data transmission in inactive mode using the time-frequency resources that may enable the second network node 112 serving the second cell 122 to decode any UL data transmission performed in inactive mode in the second cell 122 correctly.

### Action 406

In some embodiments, wherein the configuration is the second configuration, the wireless device 130 may be unable, within a time period, to determine in Action 403, whether or not the second configuration may apply in the second cell 122 within a time period. In some of such embodiments the wireless device 130 may, in this Action 406, apply a first configuration in the new or second cell 122, wherein the first BWP is already allocated to the wireless device 130 in the first configuration.

In some examples, this Action 406 may be performed wherein the wireless device 130 may have been unable, within a time period, to determine whether or not the (second) configuration applies in the new or second cell 122 within a time period.

By applying the first configuration after the wireless device 130 may have been unable to determine whether or not the (second) configuration may be applicable in the second cell 122, the wireless device 130 may be enabled to fall back to a default configuration, and thereby guarantee its continued ability to transmit data during a random access in the second cell 122.

### Action 407

In one example, the first network node 111 may configure conditions for when a UE such as the wireless device 130 may use the RA resources on the 2^{nd} BWP for SDT, or if it may choose which RA resources to use.

In some embodiments, wherein the configuration is the second configuration, in this Action 407, the wireless device 130 may obtain one or more indications from at least one of: the first network node 111 and the second network node 112 serving the second cell 122.

Obtaining in this Action 407 may comprise, retrieving or fetching from a memory, determining or calculating, and/or receiving, e.g., from the first network node 111, e.g., via the first link 141, or from the second network node 112, e.g., via the second link 142.

In some examples, the one or more indications may set one or more conditions to use the (second) configuration. Conditions may be or may be based on e.g.: UE capability, priority of data, and/or size of the data. Conditions may include, with regards to UE capability, conditions related to the fact that some UEs may e.g. not support the band width of the 2^{nd} BWP, or may have low processing capabilities. Conditions may include, with regards to the priority of data, that for high priority data, the wireless device 130 may e.g., be allowed to use or select the BWP with shorter periodicity. Conditions may include, with regards to the size of data, that e.g., if the size of the data, e.g., UL data available for transmission plus MAC header and, where required, MAC CEs, is small enough to fit in the msgA PUSCH size, or is less than *ra-Msg3SizeGroupA* on the initial BWP, the wireless device 130 may choose this BWP. Otherwise, the wireless device 130 may choose the RA resources on the 2^{nd} BWP.

In one example, multiple BWPs may be configured for SDT, where above example conditions may indicate which BWP to use. For example, different BWPs may be configured for different UL data sizes to be transmitted. In another example if multiple BWPs may be configured, the selection of which BWP to use for SDT may be a function of the UE identifier, such as Inactive RNTI (I-RNTI).

In other examples, the one or more indications may comprise, e.g., a response to msgA or preamble, such as a msgB or RAR.

In some examples, for obtaining, in this Action 407, the one or more indications, e.g., a response to msgA or preamble, such as a msgB or RAR, the wireless device 130 may either use the search space as defined by the second bandwidth part or use the search space as defined by the first bandwidth part, that is, the initial BWP, or monitor both.

From the response message, the wireless device 130 may deduce if it may need to stay on the 2nd BWP, e.g., the first network node 111 may decide to move the wireless device 130 to connected for additional transmissions, or to go back to the initial BWP, e.g., the wireless device 130 may remain in inactive state or may be moved to connected state on the initial BWP. This may be indicated in DCI, in the message payload, or by rules taking into account the search space used for receiving the response. The rule may for example be so that the wireless device 130 always moves to the new BWP, always remains in the initial BWP or moves to the same BWP where the response was received.

In some examples, the obtaining in this Action 407 may be performed after the determining of Action 403, as depicted in Figure 4.

In some examples, the obtaining in this Action 407 may be performed before the determining of Action 403, which is not depicted in Figure 4.

In some of such examples, the determining 403 may be based on at least a first indication, of the one or more indications, obtained from the second network node 112, e.g., the at least one first indication.

The first indication may set one or more conditions to use the (second) configuration. As explained earlier, conditions may be or may be based on e.g.: UE capability, priority of data, size of the data.

By obtaining the one or more first indications in this Action 407, the wireless device 130 may be enabled to, with the proviso that the one or more first indications set the one or more conditions, apply the second configuration with more granularity, so that the benefits of transmitting data in inactive state during random access may be enhanced. The wireless device 130 may additionally or alternatively be enabled to deduce if it may need to stay on the 2nd BWP, or to go back to the initial BWP.

### Action 408

In some embodiments, the wireless device 130 may, in this Action 408, update the (second) configuration and/or the set of uplink time-frequency resources to perform random access for data transmission in inactive mode based on at least one of: i) a second indication, g., a RAR or msgB, received from the first network node 111, and ii) one or more rules.

In some examples, the at least one second bandwidth part may comprise a plurality of second bandwidth parts.

In some of such examples, the set of uplink time-frequency resources may comprise different sub-sets of uplink time-frequency resources. Each of the sub-sets of uplink time-frequency resources may be allocated in a respective second bandwidth part of the plurality of second bandwidth parts.

Further details of these embodiments may be found described below.

By updating the set of uplink time-frequency resources in this Action 408, the first network node 111 may be enabled to dynamically adapt the second configuration to the ongoing circumstances in the wireless communications network 100, and thereby enable to obtain the benefits of transmitting data during inactive state, without hindering the optimal performance of the wireless communications network 100 in other functions.

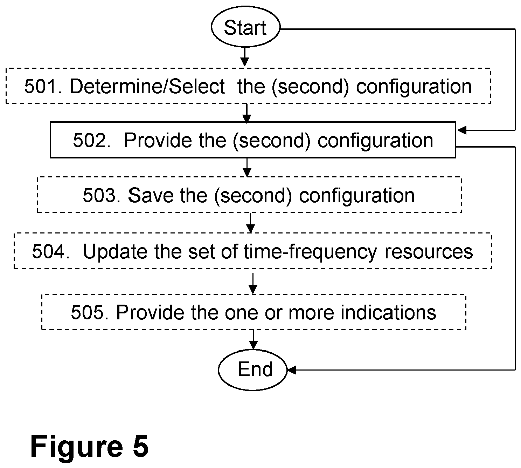

Embodiments of a method, performed by the first network node 111 will now be described with reference to the flowchart depicted in **Figure 5**. The method may be understood to be for handling uplink communication by the wireless device 130. The wireless device 130 and the first network node 111 operate in the wireless communications network 100. The method may be understood to be computer-implemented.

Uplink communication may comprise uplink transmission of data.

In some embodiments, the size of the buffer of the wireless device 130 for the uplink communication may be smaller than the threshold. This may be understood to mean that the data comprised in the uplink communication may be "Small Data".

The data may be user plane data.

The method may comprise one or more of the following actions.

Several embodiments are comprised herein. In some embodiments all the actions may be performed. In some embodiments, one or more actions may be performed. It should be noted that the examples herein may be not mutually exclusive. One or more embodiments may be combined, where applicable. All possible combinations are not described to simplify the description. Components from one embodiment may be tacitly assumed to be present in another embodiment and it will be obvious to a person skilled in the art how those components may be used in the other exemplary embodiments. A non-limiting example of the method performed by the first network node 111 is depicted in Figure 5. Some actions may be performed in a different order than that shown in Figure 5. In Figure 5, optional actions are represented with dashed lines.

The detailed description of some of the following corresponds to the same references provided above, in relation to the actions described for the wireless device 130 and will thus not be repeated here. For example, in some embodiments, the wireless communications network 100 may support at least one of: NR, LTE, LTE-M, eMTC, and NB-loT.

### Action 501

In this Action 501, the first network node 111 determines the (second) configuration. The configuration configures the wireless device 130 with the set of uplink time-frequency resources to perform random access for data transmission in inactive mode, e.g., RRC inactive mode. The size of the buffer for the data transmission, or uplink communication, of the wireless device 130 is smaller than the threshold. The set of uplink time-frequency resources are allocated in at least one second bandwidth part (BWP), also referred to as second bandwidth part (BWP), or non- initial bandwidth part. The at least one second BWP is different from the first BWP already allocated to the wireless device 130, also referred to as first bandwidth part, or an initial bandwidth part.

Determining in this Action 501 may comprise calculating, deriving, selecting etc.

### Action 502

In this Action 502, the first network node 111 provides the (second) configuration to the wireless device 130. As stated above, the (second) configuration configures the wireless device 130 with the set of uplink time-frequency resources to perform random access for data transmission in inactive mode, e.g., RRC inactive mode. The size of the buffer for the data transmission, or uplink communication, of the wireless device 130 is smaller than the threshold, e.g., the data may be small data. The set of uplink time-frequency resources are allocated in at least one second bandwidth part (BWP), also referred to as second bandwidth part (BWP), or non- initial bandwidth part. The at least one second BWP is different from the first BWP, also referred to as initial bandwidth part, already allocated to the wireless device 130.

Providing in this Action 501 may comprise sending, e.g., to the wireless device 130, e.g., via the first link 141, or retrieving or fetching from a memory.

The first bandwidth part may have been allocated in the first configuration, e.g., by the first network node 111.

The inactive state may be, e.g., as defined in 5G or in a younger system having equivalent functionality.

The time-frequency resources may be, e.g., ODFM symbols.

In some embodiments, the providing in this Action 502 may be while the wireless device 130 is in connected mode, e.g., RRC connected mode. Expressed differently, while the first network node 111 is in connected mode, e.g., RRC connected mode, with the wireless device 130.

In some examples, the providing 502 may be performed in the first cell, e.g., the first cell 121 served by the first network node 111.

The second BWP may or may not overlap the initial BWP.

In some embodiments, the at least one second BWP may comprise a plurality of second BWPs. The set of uplink time-frequency resources may comprise different sub-sets of uplink time-frequency resources. Each of the sub-sets of uplink time-frequency resources may be allocated in the respective second BWP of the plurality of second BWPs.

The (second) configuration may have the different periodicity than the first configuration and may comprise the offset with respect to the periodicity of the first configuration.

The providing in this Action 503 may be in one of: dedicated RRC signalling, and system information signalling. The first BWP may be already allocated to the wireless device 130 in the first configuration.

In some embodiments, the providing in this Action 502 may be in system information, and the (second) configuration may indicate, e.g., comprise, the identifier of the (second) configuration.

### Action 503

In some embodiments, wherein after the providing in Action 502, the wireless device 130 may be moved to inactive state/mode, e.g., RRC inactive mode, the first network node 111 may, in this Action 503, save the (second) configuration in the UE context of the wireless device 130.

The saving in this Action 503 may be in the context, e.g., the UE context, of the wireless device 130.

### Action 504

In this Action 504, the first network node 111 may update the set of uplink time-frequency resources to perform random access for data transmission in inactive mode.

### Action 505

In this Action 505, the first network node 111 provides the one or more indications to the wireless device 130.

Providing in this Action 501 may comprise sending, e.g., to the wireless device 130, e.g., via the first link 141, or retrieving or fetching from a memory.

The one or more indications may be, or comprise, e.g., msgB, RAR, DCI, payload to the wireless device 130.

At least one first indication of the one or more indications, may, e.g., set one or more conditions to use the (second) configuration. Conditions may be or may be based on e.g.: UE capability, priority of data, size of the data.

In some embodiments, a third indication of the one or more indications may indicate the updated set of uplink time-frequency resources.

In some examples, the providing 505 may be performed after the updating 505, as depicted in Figure 5.

In some examples, the providing 505 may be performed before the updating 505, which is not depicted in Figure 5.

In some examples, at least one of: i. a second indication e.g., a RAR or msgB, provided by the first network node 111 to the wireless device 130, ii.one or more rules, may trigger the wireless device 130, and/or the first network node 111 to update the (second) configuration.

Further details of these embodiments may be found described below.

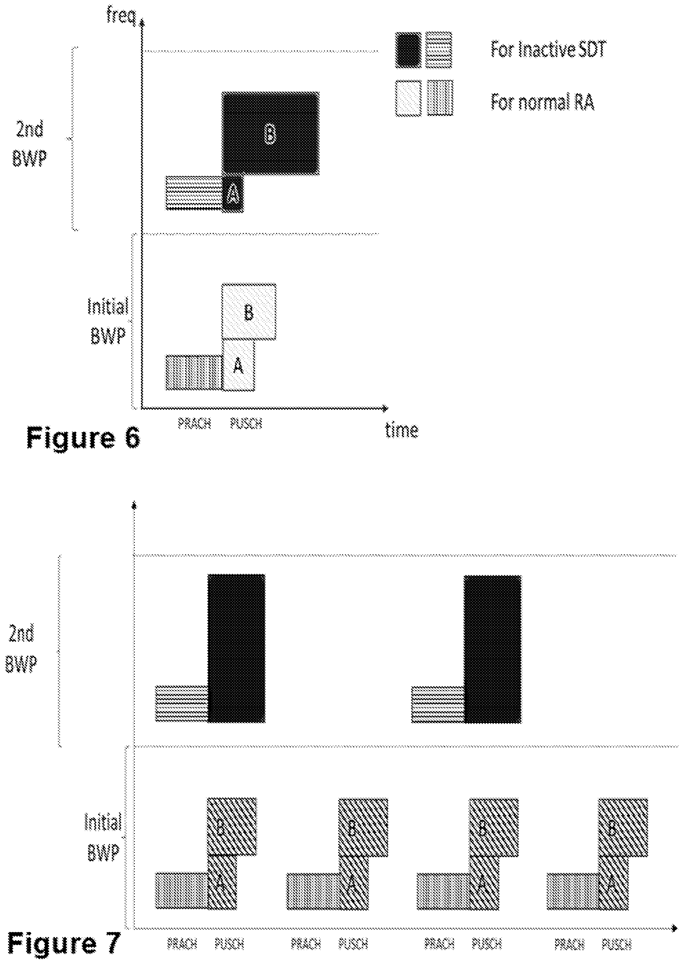

An example of configuration according to embodiments herein is shown in the schematic diagram depicted on **Figure 6****,** where a second BWP, "2nd BWP", is configured with RA resources for SDT. As indicated in the legend, the second configuration on the second BWP, "2nd BWP", comprises PRACH and PUSCH time-frequency resources for small data transmission, "SDT", in inactive state, that is, "Inactive SDT". The first configuration on the initial BWP comprises PRACH and PUSCH time-frequency resources for normal RA. The example shows 2-step RA resources, that is, time-frequency resources, where the MsgA PUSCH resources are of different sizes in the two configurations. A and B indicate two different PUSCH resources to transmit msgA, depending on size. If the wireless device 130 has "large" small data, it may select a preamble indicating that the PUSCH, data, msgA will be sent on B, otherwise it may select a preamble indicating that the PUCSH will be sent on A. In case 4-step RA is used, only the PRACH may be applicable. In the 4-step RA, msg3, corresponding to what is msgA in 2-step RA, may be scheduled by the first network node 111 using the RAR. So if the wireless device 130 were to use 4-step RA, it could transmit a preamble, indicating 4-step RA, and possibly preamble group A or preamble group B for larger grant, and then be scheduled for a msg3 transmission. It may be understood that, due to the delay with RAR, msg3 transmission may not happen on the A and B parts indicated in the figure.

Another example of configuration according to embodiments herein is shown in the schematic diagram depicted on **Figure 7****,** where the two RA configurations have different periodicities. The example shows 2-step RA resources, that is, time-frequency resources, where the MsgA PUSCH resources are of different sizes in the two configurations described in Figure 6. The legend for Figure 7 is the same as that depicted in Figure 6. The RA configuration for SDT, depicted in the 2^{nd} BWP, has a larger MsgA PUSCH resource but occurs with a longer periodicity, which may be beneficial assuming the SDT may not be time critical, but require larger PUSCH transmissions.

In another example, the RACH configuration, such as the ROs, on the non-initial BWP may be related to the RACH configuration on the initial BWP. This may be achieved by introducing a frequency offset relative the ROs on the initial BWP. In a similar way, the periodicity of the ROs in the non-initial BWP may be related to the ROs configuration on the initial BWP. This may be achieved in a similar way by introducing a time offset relative to e.g., the first RO in the PRACH configuration period on the initial BWP.

As a summarized view of the foregoing, embodiments herein may be understood to relate to introducing the possibility for an inactive UE to use RA resources on a 2nd BWP in addition to the RA Resources on the initial BWP.

Certain embodiments disclosed herein may provide one or more of the following technical advantage(s), which may be summarized as follows. Embodiments herein may be understood to enable new RA resources to be made available for SDT without utilizing more of the time-frequency (T/F) resources available on the initial BWP. This may be understood to be particularly valuable to enable more granular RACH configurations for SDT.

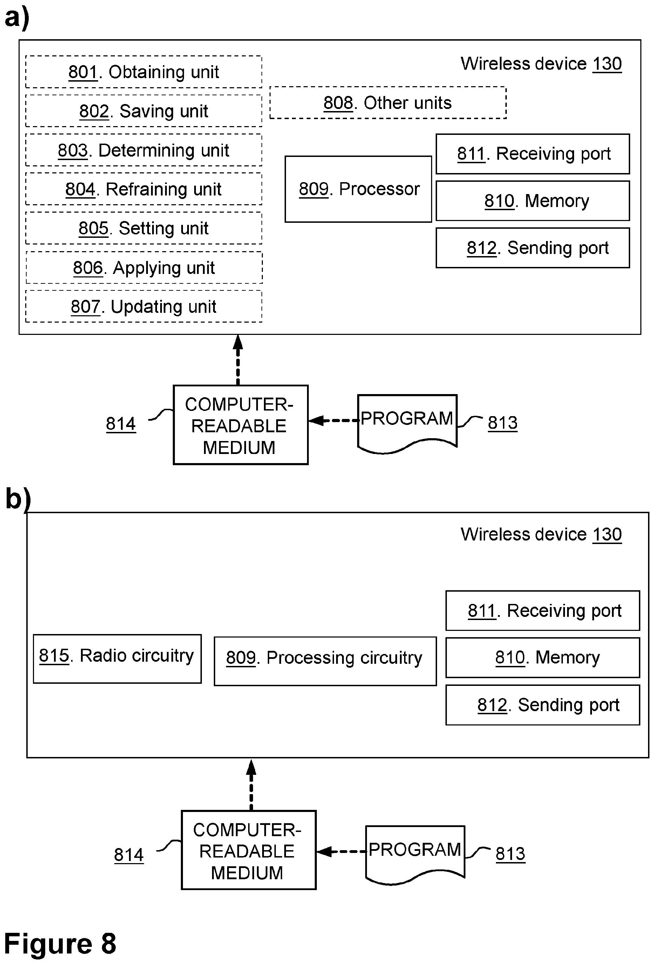

**Figure 8** depicts two different examples in panels a) and b), respectively, of the arrangement that the wireless device 130 may comprise to perform the method actions described above in relation to Figure 4. In some embodiments, the wireless device 130 may comprise the following arrangement depicted in **Figure 8a****.** The wireless device 130 may be understood to be for handling uplink communication to the network node 111, 112. The wireless device 130 and the network node 111, 112 are configured to operate in the wireless communications network 100.

Several embodiments are comprised herein. Components from one embodiment may be tacitly assumed to be present in another embodiment and it will be obvious to a person skilled in the art how those components may be used in the other exemplary embodiments. The detailed description of some of the following corresponds to the same references provided above, in relation to the actions described for the wireless device 130 and will thus not be repeated here. For example, in some embodiments, the wireless communications network 100 may support at least one of: NR, LTE, LTE-M, eMTC, and NB-loT.

In Figure 8, optional units are indicated with dashed boxes.

The wireless device 130 may be configured to perform the obtaining of Action 401, e.g. by means of an **obtaining unit 801** within the wireless device 130, configured to obtain the configuration from the first network node 111. The configuration is configured to configure the wireless device 130 with the set of uplink time-frequency resources to perform random access for data transmission in inactive mode. The size of the buffer for the data transmission of the wireless device 130 is configured to be smaller than the threshold. The set of uplink time-frequency resources are configured to be allocated in the at least one second BWP. The at least one second BWP is configured to be different from the first BWP configured to be already allocated to the wireless device 130.

In some embodiments, the obtaining may be configured to be while the wireless device 130 is in connected mode.

In some embodiments, the wireless device 130 may be configured to, with the proviso that after the obtaining, the wireless device 130 is moved to inactive mode, perform the saving of Action 402, e.g. by means of a **saving unit 802** within the wireless device 130, configured to save the configuration in the UE context of the wireless device 130.

In some embodiments, the obtaining may be configured to be in one of: dedicated RRC signalling, and system information signalling.

In some embodiments, the obtaining may be in system information, and the configuration may be configured to comprise the identifier of the configuration.

In some embodiments, the obtaining may be in the first cell 121, and the wireless device 130 may be configured to, with the proviso that the wireless device 130 enters a second cell 122, perform the determining of Action 403, e.g. by means of a **determining unit 803** within the wireless device 130, configured to determine whether or not the configuration applies in the second cell 122.

In some embodiments, the wireless device 130 may be configured to, with the proviso the wireless device 130 determines that the configuration is not to be applied in the second cell 122, perform the refraining of Action 404, e.g. by means of a **refraining unit 804** within the wireless device 130, configured to refrain from using the configuration in the second cell 122.

In some embodiments, the wireless device 130 may be configured to, with the proviso the wireless device 130 determines that the configuration applies in the second cell 122, perform the setting of Action 405, e.g. by means of a **setting unit 805** within the wireless device 130, configured to set the second BWP as active BWP when the random access procedure may be triggered for data transmission. The size of the buffer for the further data transmission of the wireless device 130 is configured to be smaller than the threshold.

In some embodiments wherein the configuration may be configured to be the second configuration, the wireless device 130 may be configured to, with the proviso the wireless device 130 is unable, within the time period, to determine whether or not the second configuration applies in the second cell 122 within the time period, perform this applying of Action 406, e.g. by means of an **applying unit 806** within the wireless device 130, configured to apply the first configuration in the second cell 122. The first BWP may be configured to be already allocated to the wireless device 130 in the first configuration.

The wireless device 130 may be configured to perform this obtaining of Action 407, e.g. by means of the obtaining unit 801, configured to obtain the one or more indications from at least one of: the first network node 111 and the second network node 112 configured to serve the second cell 122.

In some embodiments, the wireless device 130 may be configured to perform the updating of Action 408, e.g. by means of an **updating unit 807** within the wireless device 130, configured to update the set of uplink time-frequency resources to perform the random access for data transmission in inactive mode based on at least one of: i) the second indication configured to be received from the first network node 111, and ii) the one or more rules.

In some embodiments, the configuration may be configured to be the second configuration and the determining may be configured to be based on at least the first indication, of the one or more indications, configured to be obtained from the second network node 112. The first indication may be configured to set the one or more conditions to use the second configuration.

In some embodiments, wherein the configuration may be configured to be the second configuration, the second configuration may be configured to have the different periodicity than the first configuration and comprise the offset with respect to the periodicity of the first configuration.

In some embodiments, the at least one second BWP may be configured to comprise the plurality of second BWPs. The set of uplink time-frequency resources may be configured to comprise the different sub-sets of uplink time-frequency resources. Each of the sub-sets of uplink time-frequency resources may be configured to be allocated in the respective second BWP of the plurality of second BWPs.

**Other units 808** may be comprised in the wireless device 130.

The embodiments herein in the wireless device 130 may be implemented through one or more processors, such as a **processor 809** in the wireless device 130 depicted in Figure 8a, together with computer program code for performing the functions and actions of the embodiments herein. A processor, as used herein, may be understood to be a hardware component. The program code mentioned above may also be provided as a computer program product, for instance in the form of a data carrier carrying computer program code for performing the embodiments herein when being loaded into the wireless device 130. One such carrier may be in the form of a CD ROM disc. It is however feasible with other data carriers such as a memory stick. The computer program code may furthermore be provided as pure program code on a server and downloaded to the wireless device 130.

The wireless device 130 may further comprise a **memory 810** comprising one or more memory units. The memory 810 is arranged to be used to store obtained information, store data, configurations, schedulings, and applications etc. to perform the methods herein when being executed in the wireless device 130.

In some embodiments, the wireless device 130 may receive information from, e.g., the first network node 111 and/or the second network node 112, through a **receiving port 811.** In some embodiments, the receiving port 811 may be, for example, connected to one or more antennas in wireless device 130. In other embodiments, the wireless device 130 may receive information from another structure in the wireless communications network 100 through the receiving port 811. Since the receiving port 811 may be in communication with the processor 809, the receiving port 811 may then send the received information to the processor 809. The receiving port 811 may also be configured to receive other information.

The processor 809 in the wireless device 130 may be further configured to transmit or send information to e.g., the first network node 111, the second network node 112, or another structure in the wireless communications network 100, through a **sending port 812,** which may be in communication with the processor 809, and the memory 810.

Those skilled in the art will also appreciate that the different units 801-808 described above may refer to a combination of analog and digital modules, and/or one or more processors configured with software and/or firmware, e.g., stored in memory, that, when executed by the one or more processors such as the processor 809, perform as described above. One or more of these processors, as well as the other digital hardware, may be included in a single Application-Specific Integrated Circuit (ASIC), or several processors and various digital hardware may be distributed among several separate components, whether individually packaged or assembled into a System-on-a-Chip (SoC).

Also, in some embodiments, the different units 801-808 described above may be implemented as one or more applications running on one or more processors such as the processor 809.

Thus, the methods according to the embodiments described herein for the wireless device 130 may be respectively implemented by means of a **computer program 813** product, comprising instructions, i.e., software code portions, which, when executed on at least one processor 809, cause the at least one processor 809 to carry out the actions described herein, as performed by the wireless device 130. The computer program 813 product may be stored on a **computer-readable storage medium 814.** The computer-readable storage medium 814, having stored thereon the computer program 813, may comprise instructions which, when executed on at least one processor 809, cause the at least one processor 809 to carry out the actions described herein, as performed by the wireless device 130. In some embodiments, the computer-readable storage medium 814 may be a non-transitory computer-readable storage medium, such as a CD ROM disc, or a memory stick. In other embodiments, the computer program 813 product may be stored on a carrier containing the computer program 813 just described, wherein the carrier is one of an electronic signal, optical signal, radio signal, or the computer-readable storage medium 814, as described above.

The wireless device 130 may comprise a communication interface configured to facilitate communications between the wireless device 130 and other nodes or devices, e.g., the first network node 111 and/or the second network node 112. The interface may, for example, include a transceiver configured to transmit and receive radio signals over an air interface in accordance with a suitable standard.

In other embodiments, the wireless device 130 may comprise the following arrangement depicted in **Figure 8b****.** The wireless device 130 may comprise a **processing circuitry 809,** e.g., one or more processors such as the processor 809, in the wireless device 130 and the memory 810. The wireless device 130 may also comprise a **radio circuitry 815,** which may comprise e.g., the receiving port 811 and the sending port 812. The processing circuitry 815 may be configured to, or operable to, perform the method actions according to Figure 4, Figure 6, Figure 7 and/or Figures 11-15, in a similar manner as that described in relation to Figure 8a. The radio circuitry 815 may be configured to set up and maintain at least a wireless connection with the first network node 111 and/or the second network node 112. Circuitry may be understood herein as a hardware component.

Hence, embodiments herein also relate to the wireless device 130 comprising the processing circuitry 809 and the memory 810, said memory 810 containing instructions executable by said processing circuitry 809, whereby the wireless device 130 is operative to perform the actions described herein in relation to the wireless device 130, e.g., in Figure 4, Figure 6, Figure 7 and/or Figures 11-15.

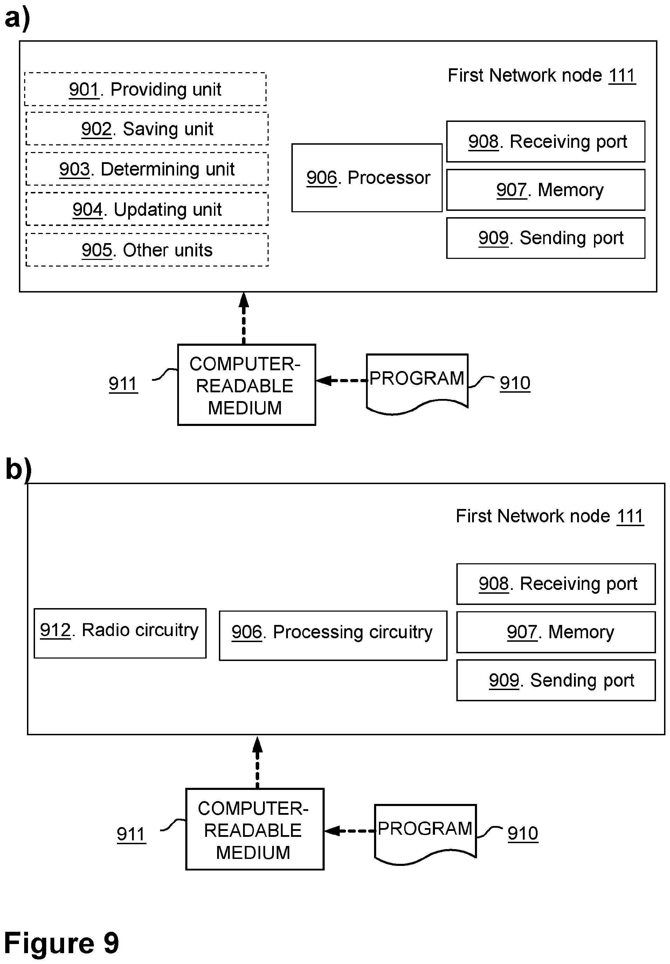

**Figure 9** depicts two different examples in panels a) and b), respectively, of the arrangement that the first network node 111 may comprise to perform the method actions described above in relation to Figure 5. In some embodiments, the first network node 111 may comprise the following arrangement depicted in **Figure 9a****.** The first network node 111 may be understood to be for handling uplink communication by the wireless device 130. The first network node 111 is configured to operate in the wireless communications network 100.

Several embodiments are comprised herein. Components from one embodiment may be tacitly assumed to be present in another embodiment and it will be obvious to a person skilled in the art how those components may be used in the other exemplary embodiments. The detailed description of some of the following corresponds to the same references provided above, in relation to the actions described for the first network node 111, and will thus not be repeated here. For example, in some embodiments, the wireless communications network 100 may support at least one of: NR, LTE, LTE-M, eMTC, and NB-loT.

In Figure 9, optional units are indicated with dashed boxes.

The first network node 111 may be configured to perform this providing of Action 502, e.g. by means of a **providing unit 901** within the first network node 111, configured to provide the configuration to the wireless device 130. The configuration is configured to configure the wireless device 130 with the set of uplink time-frequency resources to perform the random access for data transmission in inactive mode. The size of the buffer for the data transmission of the wireless device 130 is configured to be smaller than the threshold. The set of uplink time-frequency resources are configured to be allocated in the at least one second BWP. The at least one second BWP is configured to be different from the first BWP configured to be already allocated to the wireless device 130.

In some embodiments, the providing may be configured to be while the wireless device 130 is in connected mode.

In some embodiments, the first network node 111 may be configured to, with the proviso that after the providing, the wireless device 130 is moved to inactive mode, perform the saving of Action 503, e.g. by means of a **saving unit 902** within the first network node 111, configured to save the configuration in the UE context of the wireless device 130.

In some embodiments, the providing may be configured to be in one of: dedicated RRC signalling, and system information signalling.

In some embodiments, the providing may be configured to be in system information, and the configuration may be configured to comprise the identifier of the configuration.

In some embodiments, the providing may be configured to be in the first cell 121 configured to be served by the first network node 111.

The first network node 111 may be further configured to perform the determining of Action 501, e.g. by means of a **determining unit 903** within the first network node 111, configured to determine the configuration.

The first network node 111 may be further configured to perform the updating of Action 504, e.g. by means of an **updating unit 904** within the first network node 111, configured to update the set of uplink time-frequency resources to perform the random access for data transmission in inactive mode.

The first network node 111 may be further configured to perform the providing of Action 505, e.g. by means of the providing unit 901, configured to provide one or more indications to the wireless device 130.

In some embodiments, the third indication of the one or more indications may be configured to indicate the set of uplink time-frequency resources configured to be updated.

In some embodiments, wherein the configuration may be configured to be the second configuration, the second configuration may be configured to have the different periodicity than the first configuration and may be configured to comprise the offset with respect to the periodicity of the first configuration. The first BWP may be configured to be already allocated to the wireless device 130 in the first configuration.

In some embodiments, the at least one second BWP may be configured to comprise the plurality of second BWPs. The set of uplink time-frequency resources may be configured to comprise the different sub-sets of uplink time-frequency resources. Each of the sub-sets of uplink time-frequency resources may be configured to be allocated in the respective second BWP of the plurality of second BWPs.

**Other units 905** may be comprised in the first network node 111.

The embodiments herein in the first network node 111 may be implemented through one or more processors, such as a **processor 906** in the first network node 111 depicted in Figure 9a, together with computer program code for performing the functions and actions of the embodiments herein. A processor, as used herein, may be understood to be a hardware component. The program code mentioned above may also be provided as a computer program product, for instance in the form of a data carrier carrying computer program code for performing the embodiments herein when being loaded into the first network node 111. One such carrier may be in the form of a CD ROM disc. It is however feasible with other data carriers such as a memory stick. The computer program code may furthermore be provided as pure program code on a server and downloaded to the first network node 111.

The first network node 111 may further comprise a **memory 907** comprising one or more memory units. The memory 907 is arranged to be used to store obtained information, store data, configurations, schedulings, and applications etc. to perform the methods herein when being executed in the first network node 111.

In some embodiments, the first network node 111 may receive information from, e.g., the wireless device 130 and/or the second network node 112, through a **receiving port 908.** In some embodiments, the receiving port 908 may be, for example, connected to one or more antennas in first network node 111. In other embodiments, the first network node 111 may receive information from another structure in the wireless communications network 100 through the receiving port 908. Since the receiving port 908 may be in communication with the processor 906, the receiving port 908 may then send the received information to the processor 906. The receiving port 908 may also be configured to receive other information.

The processor 906 in the first network node 111 may be further configured to transmit or send information to e.g., the wireless device 130, the second network node 112, and/or another structure in the wireless communications network 100, through a **sending port 909,** which may be in communication with the processor 906, and the memory 907.

Those skilled in the art will also appreciate that the different units 901-905 described above may refer to a combination of analog and digital modules, and/or one or more processors configured with software and/or firmware, e.g., stored in memory, that, when executed by the one or more processors such as the processor 906, perform as described above. One or more of these processors, as well as the other digital hardware, may be included in a single Application-Specific Integrated Circuit (ASIC), or several processors and various digital hardware may be distributed among several separate components, whether individually packaged or assembled into a System-on-a-Chip (SoC).

Also, in some embodiments, the different units 901-905 described above may be implemented as one or more applications running on one or more processors such as the processor 906.

Thus, the methods according to the embodiments described herein for the first network node 111 may be respectively implemented by means of a **computer program 910** product, comprising instructions, i.e., software code portions, which, when executed on at least one processor 906, cause the at least one processor 906 to carry out the actions described herein, as performed by the first network node 111. The computer program 910 product may be stored on a **computer-readable storage medium 911.** The computer-readable storage medium 911, having stored thereon the computer program 910, may comprise instructions which, when executed on at least one processor 906, cause the at least one processor 906 to carry out the actions described herein, as performed by the first network node 111. In some embodiments, the computer-readable storage medium 911 may be a non-transitory computer-readable storage medium, such as a CD ROM disc, or a memory stick. In other embodiments, the computer program 910 product may be stored on a carrier containing the computer program 910 just described, wherein the carrier is one of an electronic signal, optical signal, radio signal, or the computer-readable storage medium 911, as described above.

The first network node 111 may comprise a communication interface configured to facilitate communications between the first network node 111 and other nodes or devices, e.g., the wireless device 130, the second network node 112, and/or another structure in the wireless communications network 100. The interface may, for example, include a transceiver configured to transmit and receive radio signals over an air interface in accordance with a suitable standard.

In other embodiments, the first network node 111 may comprise the following arrangement depicted in **Figure 9b****.** The first network node 111 may comprise a **processing circuitry 906,** e.g., one or more processors such as the processor 906, in the first network node 111 and the memory 907. The first network node 111 may also comprise a **radio circuitry 912,** which may comprise e.g., the receiving port 908 and the sending port 909. The processing circuitry 912 may be configured to, or operable to, perform the method actions according to Figure 5, Figure 6, Figure 7 and/or Figures 11-15, in a similar manner as that described in relation to Figure 9a. The radio circuitry 912 may be configured to set up and maintain at least a wireless connection with the wireless device 130, the second network node 112, and/or another structure in the wireless communications network 100. Circuitry may be understood herein as a hardware component.

Hence, embodiments herein also relate to the first network node 111 comprising the processing circuitry 906 and the memory 907, said memory 907 containing instructions executable by said processing circuitry 906, whereby the first network node 111 is operative to perform the actions described herein in relation to the first network node 111, e.g., in Figure 5, Figure 6, Figure 7 and/or Figures 11-15.

Embodiments herein may be related to NR, NR Small Data Enhancements, MTC, loT, early data.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

As used herein, the expression "at least one of:" followed by a list of alternatives separated by commas, and wherein the last alternative is preceded by the "and" term, may be understood to mean that only one of the list of alternatives may apply, more than one of the list of alternatives may apply or all of the list of alternatives may apply. This expression may be understood to be equivalent to the expression "at least one of:" followed by a list of alternatives separated by commas, and wherein the last alternative is preceded by the "or" term.

### Examples related to embodiments herein:

More specifically, the following are examples related to a wireless device, such as the wireless device 130, e.g., a 5G UE or a UE, and examples related to a network node, such as the first network node 111, e.g., a gNB.

The wireless device 130 examples relate to **Figure 3****,** **Figure 4****,** **Figure 6, Figure 7** and **Figures 10****-15.**

A method, performed by a wireless device, such as the wireless device 130 is described herein. The method may be understood to be for handling uplink communication to a network node, such as the first network node 111. The wireless device 130 and the first network node 111 may operate in a wireless communications network, such as the wireless communications network 100.

Uplink communication may comprise uplink transmission of data.

In some examples, a size of a buffer of the wireless device 130 for the uplink communication may be smaller than a threshold. This may be understood to mean that the data comprised in the uplink communication may be "Small Data".

The data may be user plane data.

The method may comprise one or more of the following actions.

Several examples are comprised herein. In some examples all the actions may be performed. In some examples, one or more actions may be performed. It should be noted that the examples herein may be not mutually exclusive. One or more examples may be combined, where applicable. All possible combinations are not described to simplify the description. Components from one embodiment may be tacitly assumed to be present in another embodiment and it will be obvious to a person skilled in the art how those components may be used in the other exemplary examples. A non-limiting example of the method performed by the wireless device 130 is depicted in Figure 4. Some actions may be performed in a different order than that shown in Figure 4. In Figure 4, optional actions are represented with dashed lines.
∘ **Obtaining 401** a configuration, e.g., a (second) configuration . The wireless device 130 may be configured to perform this obtaining action 401, e.g. by means of an **obtaining unit 801** within the wireless device 130, configured to perform this action.

Obtaining in this Action 401 may comprise receiving, e.g., from the first network node 111, e.g., via the first link 141, or retrieving or fetching from a memory.

The (second) configuration may be obtained from the first network node 111.

The (second) configuration may configure the wireless device 130 with a set of time-frequency resources, e.g., uplink time-frequency resources.

The set of time-frequency resources, e.g., uplink time-frequency resources, may be to perform random access for data transmission. The random access for data transmission may be in inactive mode, e.g., RRC inactive mode.

A size of a buffer for the data transmission, or uplink communication, of the wireless device 130 may be smaller than a threshold, e.g., the data may be small data.

The set of uplink time-frequency resources may be allocated in at least one second part of a bandwidth, also referred to as second bandwidth part (BWP), or non- initial bandwidth part.

The at least one second bandwidth part may be different from/than a first part of the bandwidth, also referred to as first bandwidth part, or an initial bandwidth part, already allocated to the wireless device 130. The first bandwidth part may have been allocated in a first configuration, e.g., by the first network node 111.

The inactive state may be, e.g., as defined in 5G or in a younger system having equivalent functionality.

The time-frequency resources may be, e.g., ODFM symbols.

The obtaining in this Action 401 may be while the wireless device 130 is in connected mode e.g., RRC connected mode.

The obtaining in this Action 401 may be in at one of: dedicated RRC signalling, and system information signalling.

In some examples, the obtaining in this Action 401 may be in system information, and the (second) configuration may indicate, e.g., comprise an identifier, of the (second) configuration.

In some examples, the obtaining 401 may be performed in a first cell, e.g., the first cell 121.

In some examples, the method may further comprise one or more of the following actions:
∘ **Saving 402** the (second) configuration. The wireless device 130 may be configured to perform this saving Action 402, e.g. by means of a **saving unit 802** within the wireless device 130, configured to perform this action.

The saving in this Action 402 may be in a context, e.g., a UE context, of the wireless device 130.

In some examples, this Action 402 may be performed wherein after the obtaining 401, the wireless device 130 may be moved to inactive state/mode e.g., RRC inactive mode.
∘ **Determining 403** whether or not the (second) configuration applies. The wireless device 130 may be configured to perform this determining action 403, e.g. by means of a **determining unit 803** within the wireless device 130, configured to perform this action.

Determining in this Action 403 may comprise calculating, deriving, etc.

The determining 403 may comprise determining whether or not the (second) configuration may apply in a new, or second cell, e.g., the second cell 122.

In some examples, this Action 403 may be performed wherein the obtaining 401 may have been performed in a first cell, e.g., the first cell 121, and wherein the wireless device 130 may have entered the new, or second, cell 122.
∘ **Refraining 404** from using the new, (second) configuration. The wireless device 130 may be configured to perform this refraining action 404, e.g. by means of a **refraining unit 804** within the wireless device 130, configured to perform this action.

Refraining may be understood as not performing, or avoiding the performance of.

The refraining in this Action 404 may be from using the new, (second) configuration in the new, second cell 122. The (second) configuration may be e.g., stored in the UE context.

In some examples, this Action 404 may be performed wherein, the wireless device 130 may have determined that the (second) configuration is not to be applied, e.g., does not apply, in the new, second cell 122.
∘ **Setting 405** an active bandwidth part (BWP). The wireless device 130 may be configured to perform this setting Action 405, e.g. by means of a **setting unit 805** within the wireless device 130, configured to perform this action.

The setting in this Action 405 may be of an active BWP to the second BWP.

In some examples, this Action 405 may be performed, e.g., when a random access procedure may be triggered for data transmission, wherein a size of a buffer for a further uplink communication of the wireless device 130 is smaller than the threshold, for example, for small data transmission.

In some examples, this Action 405 may be performed wherein the wireless device 130 may have determined that the (second) configuration applies in the new, second cell 122.
∘ **Applying 406** the first configuration in the new or second cell 122. The wireless device 130 may be configured to perform this applying Action 406, e.g. by means of an **applying unit 806** within the wireless device 130, configured to perform this action.

In some examples, this Action 406 may be performed wherein the wireless device 130 may have been unable, within a time period, to determine whether or not the (second) configuration applies in the new or second cell 122 within a time period.
∘ **Obtaining 407** one or more indications. The wireless device 130 may be configured to perform this obtaining Action 407, e.g. by means of the obtaining unit 801, configured to perform this action.

Obtaining in this Action 604 may comprise, retrieving or fetching from a memory, determining or calculating, and/or receiving, e.g., from the first network node 111, e.g., via the first link 141, or from the second network node 112, e.g., via the second link 142.

The wireless device 130 may obtain the one or more indications from at least one of: the first network node 111 and the second network node 112 serving the new or second cell 122.

In some examples, for obtaining, in this Action 407, the one or more indications, e.g., a response to msgA or preamble, such as a msgB or RAR, the wireless device 130 may either use the search space as defined by the second bandwidth part or use the search space as defined by the first bandwidth part, or monitor both.

In some examples, the obtaining 407 may be performed after the determining 403, as depicted in Figure 4.

In some examples, the obtaining 407 may be performed before the determining 403, which is not depicted in Figure 4.

In some of such examples, the determining 403 may be based on at least a first indication, of the one or more indications, obtained from the second network node 112, e.g., the at least one first indication.

The at least one first indication may, e.g., set one or more conditions to use the (second) configuration. Conditions may be or may be based on e.g.: UE capability, priority of data, size of the data.
∘ **Updating 408** the (second) configuration and/or the set of uplink time-frequency resources, e.g., to perform random access for data transmission in inactive mode. The wireless device 130 may be configured to perform this updating action 408, e.g. by means of an **updating unit 807** within the wireless device 130, configured to perform this action.

The updating may be based on at least one of: i. a second indication e.g., a RAR or msgB, received from the first network node 111, ii.one or more rules.

The (second) configuration may have a different periodicity than the first configuration e.g., may comprise an offset with respect to a periodicity of the first configuration.

In some examples, the at least one second bandwidth part may comprise a plurality of second bandwidth parts.

In some of such examples, the set of uplink time-frequency resources may comprise different sub-sets of uplink time-frequency resources. Each of the sub-sets of uplink time-frequency resources may be allocated in a respective second bandwidth part of the plurality of second bandwidth parts.

Further details of these examples may be found described below.

In some examples, the wireless communications network 100 may support at least one of: New Radio (NR), Long Term Evolution (LTE), LTE for Machines (LTE-M), enhanced Machine Type Communication (eMTC), and Narrow Band Internet of Things (NB-loT).

**Other units 808** may be comprised in the wireless device 130.

The wireless device 130 may also be configured to communicate user data with a host application unit in a host computer 1110, e.g., via another link such as 1160.

In Figure 8, optional units are indicated with dashed boxes.

The wireless device 130 may comprise an interface unit to facilitate communications between the wireless device 130 and other nodes or devices, e.g., the first network node 111, the host computer 1110, or any of the other nodes. In some particular examples, the interface may, for example, include a transceiver configured to transmit and receive radio signals over an air interface in accordance with a suitable standard.

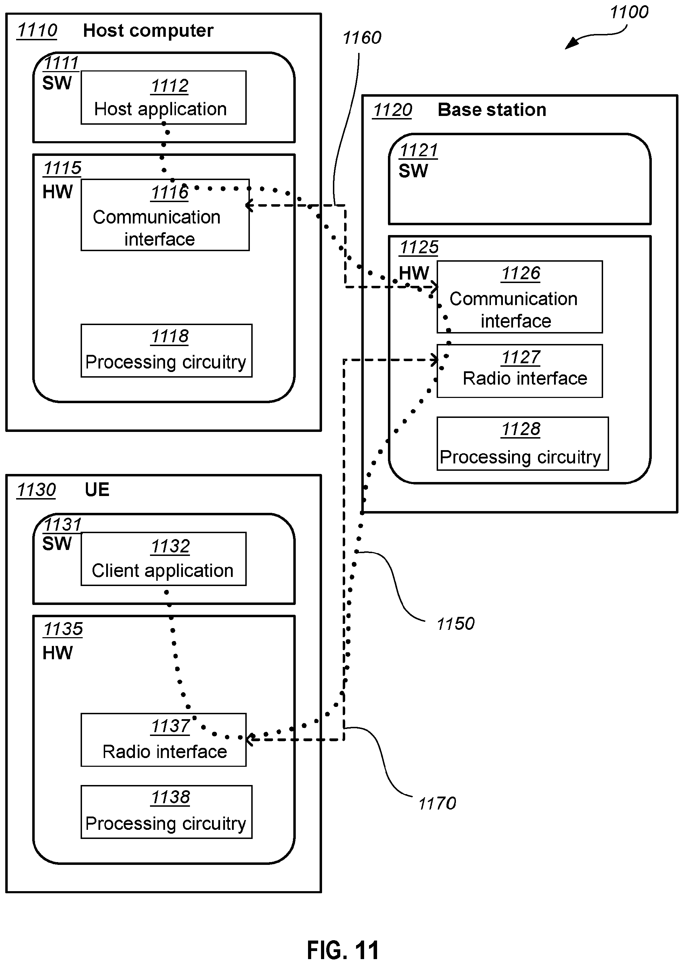

The wireless device 130 may comprise an arrangement as shown in Figure 8 or in Figure 11.

The first network node 111 examples relate to **Figure 3****,** **Figure 5****,** **Figure 6, Figure 7** and **Figures 10****-15.**

A method, performed by a network node, such as the first network node 111, is described herein. The method may be understood to be for handling uplink communication by a wireless device, such as the wireless device130. The first network node 111 and the wireless device 130 may be operate in a wireless communications network, such as the wireless communications network 100.

Uplink communication may comprise uplink transmission of data.

In some examples, a size of a buffer of the wireless device 130 for the uplink communication may be smaller than a threshold. This may be understood to mean that the data comprised in the uplink communication may be "Small Data".

The data may be user plane data.

The method may comprise one or more of the following actions.

Several examples are comprised herein. In some examples all the actions may be performed. In some examples, one or more actions may be performed. It should be noted that the examples herein may be not mutually exclusive. One or more examples may be combined, where applicable. All possible combinations are not described to simplify the description. Components from one embodiment may be tacitly assumed to be present in another embodiment and it will be obvious to a person skilled in the art how those components may be used in the other exemplary examples. A non-limiting example of the method performed by the first network node 111 is depicted in Figure 5. Some actions may be performed in a different order than that shown in Figure 5. In Figure 5, optional actions are represented with dashed lines.
∘ **Providing 502** a configuration, e.g., a (second) configuration. The first network node 111 may be configured to perform this providing action 502, e.g. by means of a **providing unit 901** within the first network node 111, configured to perform this action.

Providing in this Action 501 may comprise sending, e.g., to the wireless device 130, e.g., via the first link 141, or retrieving or fetching from a memory.

The (second) configuration may be provided to the wireless device 130.

The (second) configuration may configure the wireless device 130 with the set of time-frequency resources, e.g., uplink time-frequency resources.

The set of time-frequency resources, e.g., uplink time-frequency resources, may be for the wireless device 130 to perform random access for data transmission. The random access for data transmission may be in inactive mode, e.g., RRC inactive mode.

A size of a buffer for the data transmission, or uplink communication, of the wireless device 130 may be smaller than a threshold, e.g., the data may be small data.

The set of uplink time-frequency resources may be allocated in at least one second part of a bandwidth, also referred to as second bandwidth part (BWP), or non- initial bandwidth part.

The at least one second bandwidth part may be different from/than a first part of the bandwidth, also referred to as first bandwidth part, or an initial bandwidth part, already allocated to the wireless device 130. The first bandwidth part may have been allocated in a first configuration, e.g., by the first network node 111.

The inactive state may be, e.g., as defined in 5G or in a younger system having equivalent functionality.

The time-frequency resources may be, e.g., ODFM symbols.

The providing in this Action 502 may be while the wireless device 130 is in connected mode e.g., RRC connected mode. Expressed differently, while the first network node 111 is in connected mode, e.g., RRC connected mode, with the wireless device 130.

The providing in this Action 502 may be in at one of: dedicated RRC signalling, and system information signalling.

In some examples, the providing in this Action 502 may be in system information, and the (second) configuration may indicate, e.g., comprise an identifier, of the (second) configuration.

In some examples, the providing 502 may be performed in a first cell, e.g., the first cell 121. The first cell 121 may be served by the first network node 111

In some examples, the method may further comprise one or more of the following actions:
∘ **Saving 503** the (second) configuration. The first network node 111 may be configured to perform this saving Action 503, e.g. by means of a **saving unit 902** within the first network node 111, configured to perform this action.

The saving in this Action 503 may be in a context, e.g., a UE context, of the wireless device 130.

In some examples, this Action 503 may be performed wherein after the providing 502, the wireless device 130 may be moved to inactive state/mode e.g., RRC inactive mode.
∘ **Determining/Selecting 501** the (second) configuration. The first network node 111 may be configured to perform this determining action 501, e.g. by means of a **determining unit 903** within the first network node 111, configured to perform this action.

Determining in this Action 501 may comprise calculating, deriving, etc.
∘ **Updating 504** the (second) configuration and/or the set of uplink time-frequency resources, e.g., to perform random access for data transmission in inactive mode. The first network node 111 may be configured to perform this updating action 504, e.g. by means of an **updating unit 904** within the first network node 111, configured to perform this action.
∘ **Providing 505** one or more indications. The first network node 111 may be configured to perform this providing Action 505, e.g. by means of the providing unit 901, configured to perform this action.

Providing in this Action 501 may comprise sending, e.g., to the wireless device 130, e.g., via the first link 141, or retrieving or fetching from a memory.

The one or more indications may be, or comprise, e.g., msgB, RAR, DCI, payload to the wireless device 130.

At least one first indication, of the one or more indications, may, e.g., set one or more conditions to use the (second) configuration. Conditions may be or may be based on e.g.: UE capability, priority of data, size of the data.

Another e.g., a third indication, of the one or more indications may indicate the updated set of uplink time-frequency resources.

In some examples, the providing 505 may be performed after the updating 505, as depicted in Figure 5.

In some examples, the providing 505 may be performed before the updating 505, which is not depicted in Figure 5.

In some examples, at least one of: i. a second indication e.g., a RAR or msgB, provided by the first network node 111 to the wireless device 130, ii.one or more rules, may trigger the wireless device 130, and/or the first network node 111 to update the (second) configuration.

The (second) configuration may have a different periodicity than the first configuration e.g., may comprise an offset with respect to a periodicity of the first configuration.

In some examples, the at least one second bandwidth part may comprise a plurality of second bandwidth parts.

In some of such examples, the set of uplink time-frequency resources may comprise different sub-sets of uplink time-frequency resources. Each of the sub-sets of uplink time-frequency resources may be allocated in a respective second bandwidth part of the plurality of second bandwidth parts.

Further details of these examples may be found described below.

In some examples, the wireless communications network 100 may support at least one of: New Radio (NR), Long Term Evolution (LTE), LTE for Machines (LTE-M), enhanced Machine Type Communication (eMTC), and Narrow Band Internet of Things (NB-loT).

### Selected examples related to embodiments herein

Example 1. A method performed by a wireless device (130), the method being for handling uplink communication to a (first) network node (111), the wireless device (130) and the (first) network node (111) operating in a wireless communications network (100), the method comprising:
   - *obtaining* (401) a (second) configuration from the (first) network node (111), the (second) configuration configuring the wireless device (130) with a set of (uplink) time-frequency resources to perform random access for data transmission in inactive mode (e.g., RRC inactive mode), wherein a size of a buffer for the data transmission (uplink communication) of the wireless device (130) is smaller than a threshold, wherein the set of (uplink) time-frequency resources are allocated in at least one second bandwidth part, the at least one second bandwidth part, e.g., a non- initial bandwidth part, being different from a first bandwidth part, e.g., an initial bandwidth part, already allocated to the wireless device (130) (e.g., allocated in a first configuration).
Example 2. The method according to example 1, wherein the obtaining (401) is while the wireless device (130) is in connected mode (e.g., RRC connected mode).
Example 3. The method according to example 2, wherein after the obtaining (401), the wireless device (130) is moved to inactive state/mode (e.g., RRC inactive mode), and wherein the method further comprises:
   - *saving* (402) the (second) configuration in a UE context of the wireless device (130).
Example 4. The method according to any of examples 1-3, wherein the obtaining (401) is in one of:
   - dedicated RRC signalling, and
   - system information signalling.
Example 5. The method according to example 4, wherein the obtaining (401) is in system information, and wherein the (second) configuration indicates (e.g., comprises an identifier) of the (second) configuration.
Example 6. The method according to any of examples 1-5, e.g., wherein the obtaining (401) is in a first cell (121), wherein the wireless device (130) enters a (new, or second) cell (122) and wherein the method further comprises:
   - *determining* (403) whether or not the (second) configuration applies in the (new, or second) cell (122).
Example 7. The method according to example 6, wherein at least one of:
   (1) the wireless device (130) determines that the (second) configuration is not to be applied (e.g., does not apply) in the (new, second) cell (122), and wherein the method further comprises:
      - *refraining* (404) from using the (new, second) configuration in the (new, second) cell (122) (e.g., stored in the UE context), and
   (2) the wireless device (130) determines that the (second) configuration applies in the (new, second) cell (122), and wherein the method further comprises:
      - *setting* (405) an active BWP to the second BWP, e.g., when a random access procedure is triggered for data transmission, wherein a size of a buffer for a further (uplink communication) of the wireless device (130) is smaller than the threshold.
Example 8. The method according to example 6, the wireless device (130) is unable, within a time period, to determine whether or not the (second) configuration applies in the (new, second) cell (122) within a time period, and wherein the method further comprises:
   - *applying* (406) the first configuration in the (new, second) cell (122).
Example 9. The method according to any of examples 6-8, the method further comprising:
   - *obtaining (407)* one or more indications from at least one of: the first network node (111) and a second network node (112) serving the (new, second) cell (122).
Example 10. The method according to example 9, wherein the determining (403) is based on at least a first indication, of the one or more indications, obtained from the second network node (112), e.g., the at least one first indication .g., setting one or more conditions to use the (second) configuration. Conditions may be e.g.: UE capability, priority of data, size of the data.
Example 11. The method according to example 9, wherein the method further comprises:
   - *updating* (408) the set of uplink time-frequency resources to perform random access for data transmission in inactive mode based on at least one of:
      i.a second indication (e.g., a RAR) received from the (first) network node (111),
      ii.one or more rules.
Example 12. comprises an offset with respect to a periodicity of the first configuration).
Example 13. The method according to any of examples 1-12, wherein the at least one second bandwidth part comprises a plurality of second bandwidth parts, wherein the set of uplink time-frequency resources comprises different sub-sets of uplink time-frequency resources, and wherein each of the sub-sets of uplink time-frequency resources is allocated in a respective second bandwidth part of the plurality of second bandwidth parts.
Example 14. A method performed by a (first) network node (111), the method being for handling uplink communication by a wireless device (130), the wireless device (130) and the (first) network node (111) operating in a wireless communications network (100), the method comprising:
   - *providing* (502) a (second) configuration to the wireless device (130), the (second) configuration configuring the wireless device (130) with a set of (uplink) time-frequency resources to perform random access for data transmission in inactive mode (e.g., RRC inactive mode), wherein a size of a buffer for the data transmission (uplink communication) of the wireless device (130) is smaller than a threshold, wherein the set of (uplink) time-frequency resources are allocated in at least one second bandwidth part, the at least one second bandwidth part, e.g., a non- initial bandwidth part, being different from a first bandwidth part, e.g., an initial bandwidth part, already allocated to the wireless device (130) (e.g., allocated in a first configuration).
Example 15. The method according to example 14, wherein the providing (502) is while the wireless device (130) is in connected mode (e.g., RRC connected mode).
Example 16. The method according to example 15, wherein after the providing (502), the wireless device (130) is moved to inactive state/mode (e.g., RRC inactive mode), and wherein the method further comprises:
   - *saving* (503) the (second) configuration in a UE context of the wireless device (130).
Example 17. The method according to any of examples 14-16, wherein the providing (502) is in one of:
   - dedicated RRC signalling, and
   - system information signalling.
Example 18. The method according to example 17, wherein the providing (502) is in system information, and wherein the (second) configuration indicates (e.g., comprises an identifier) of the (second) configuration.
Example 19. The method according to any of examples 14-18, e.g., wherein the providing (502) is in a first cell (121) served by the (first) network node (111).
Example 20. The method according to any of examples 14-19, wherein the method further comprises:
   - *determining*/*selecting* (501) the (second) configuration.
Example 21. The method according to any of examples 14-20, wherein the method further comprises:
   - *updating* (504) the set of uplink time-frequency resources to perform random access for data transmission in inactive mode (e.g., RRC inactive mode).
Example 22. The method according to any of examples 14-21, the method further comprising:
   - *providing* (505) one or more indications (e.g., msgB, RAR, DCI, payload) to the wireless device (130).
   e.g., at least a first indication of the one or more indications, sets one or more conditions to use the (second) configuration. Conditions may be e.g.: UE capability, priority of data, size of the data.
Example 23. The method according to examples 21 and 22, wherein another (e.g., a third) indication of the one or more indications indicates the updated set of uplink time-frequency resources.
Example 24. The method according to any of examples 14-23, wherein the (second) configuration has a different periodicity than the first configuration (e.g., comprises an offset with respect to a periodicity of the first configuration).
Example 25. The method according to any of examples 14-24, wherein the at least one second bandwidth part comprises a plurality of second bandwidth parts, wherein the set of uplink time-frequency resources comprises different sub-sets of uplink time-frequency resources, and wherein each of the sub-sets of uplink time-frequency resources is allocated in a respective second bandwidth part of the plurality of second bandwidth parts.

### Further Extensions And Variations

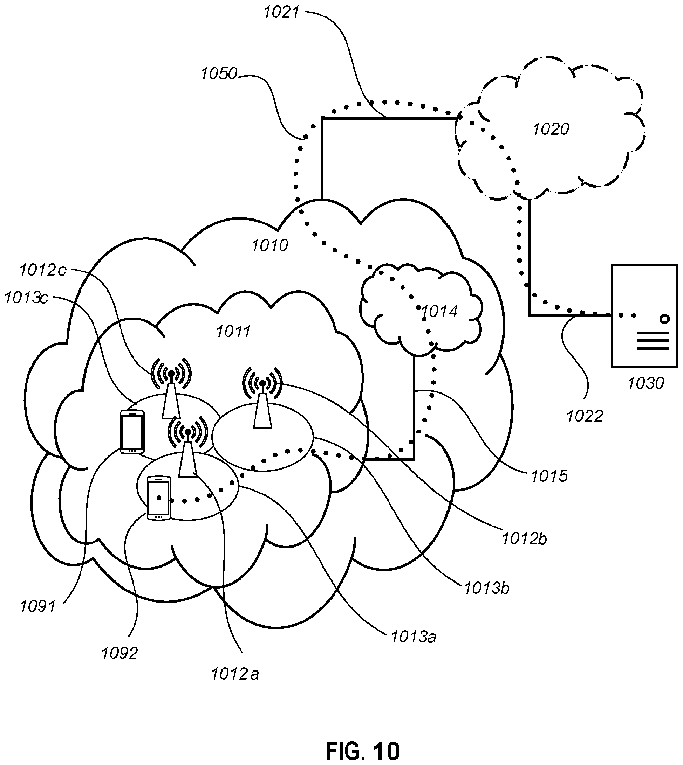

### Figure 10: Telecommunication network connected via an intermediate network to a host computer in accordance with some embodiments

With reference to Figure 10, in accordance with an embodiment, a communication system includes telecommunication network 1010 such as the wireless communications network 100, for example, a 3GPP-type cellular network, which comprises access network 1011, such as a radio access network, and core network 1014. Access network 1011 comprises a plurality of network nodes such as the first network node 111 and/or the second network node 112. For example, base stations 1012a, 1012b, 1012c, such as NBs, eNBs, gNBs or other types of wireless access points, each defining a corresponding coverage area 1013a, 1013b, 1013c. Each base station 1012a, 1012b, 1012c is connectable to core network 1014 over a wired or wireless connection 1015. A plurality of user equipments, such as the wireless device 130 are comprised in the wireless communications network 100. In Figure 10, a first UE 1091 located in coverage area 1013c is configured to wirelessly connect to, or be paged by, the corresponding base station 1012c. A second UE 1092 in coverage area 1013a is wirelessly connectable to the corresponding base station 1012a. While a plurality of UEs 1091, 1092 are illustrated in this example, the disclosed embodiments are equally applicable to a situation where a sole UE is in the coverage area or where a sole UE is connecting to the corresponding base station 1012. Any of the UEs 1091, 1092 are examples of the wireless device 130.

Telecommunication network 1010 is itself connected to host computer 1030, which may be embodied in the hardware and/or software of a standalone server, a cloud-implemented server, a distributed server or as processing resources in a server farm. Host computer 1030 may be under the ownership or control of a service provider, or may be operated by the service provider or on behalf of the service provider. Connections 1021 and 1022 between telecommunication network 1010 and host computer 1030 may extend directly from core network 1014 to host computer 1030 or may go via an optional intermediate network 1020. Intermediate network 1020 may be one of, or a combination of more than one of, a public, private or hosted network; intermediate network 1020, if any, may be a backbone network or the Internet; in particular, intermediate network 1020 may comprise two or more sub-networks (not shown).

The communication system of Figure 10 as a whole enables connectivity between the connected UEs 1091, 1092 and host computer 1030. The connectivity may be described as an over-the-top (OTT) connection 1050. Host computer 1030 and the connected UEs 1091, 1092 are configured to communicate data and/or signaling via OTT connection 1050, using access network 1011, core network 1014, any intermediate network 1020 and possible further infrastructure (not shown) as intermediaries. OTT connection 1050 may be transparent in the sense that the participating communication devices through which OTT connection 1050 passes are unaware of routing of uplink and downlink communications. For example, base station 1012 may not or need not be informed about the past routing of an incoming downlink communication with data originating from host computer 1030 to be forwarded (e.g., handed over) to a connected UE 1091. Similarly, base station 1012 need not be aware of the future routing of an outgoing uplink communication originating from the UE 1091 towards the host computer 1030.

In relation to Figures 11, 12, 13, 14, and 15, which are described next, it may be understood that a UE is an example of the wireless device 130, and that any description provided for the UE equally applies to the wireless device 130. It may be also understood that the base station is an example of the first network node 111 and/or the second network node 112, and that any description provided for the base station equally applies to the first network node 111 and/or the second network node 112.

### Figure 11: Host computer communicating via a base station with a user equipment over a partially wireless connection in accordance with some embodiments

Example implementations, in accordance with an embodiment, of the wireless device 130, e.g., a UE, the first network node 111, e.g., a base station and host computer discussed in the preceding paragraphs will now be described with reference to Figure 11. In communication system 1100, such as the wireless communications network 100, host computer 1110 comprises hardware 1115 including communication interface 1116 configured to set up and maintain a wired or wireless connection with an interface of a different communication device of communication system 1100. Host computer 1110 further comprises processing circuitry 1118, which may have storage and/or processing capabilities. In particular, processing circuitry 1118 may comprise one or more programmable processors, application-specific integrated circuits, field programmable gate arrays or combinations of these (not shown) adapted to execute instructions. Host computer 1110 further comprises software 1111, which is stored in or accessible by host computer 1110 and executable by processing circuitry 1118. Software 1111 includes host application 1112. Host application 1112 may be operable to provide a service to a remote user, such as UE 1130 connecting via OTT connection 1150 terminating at UE 1130 and host computer 1110. In providing the service to the remote user, host application 1112 may provide user data which is transmitted using OTT connection 1150.

Communication system 1100 further includes the first network node 111 and/or the second network node 112, exemplified in Figure 11 as a base station 1120 provided in a telecommunication system and comprising hardware 1125 enabling it to communicate with host computer 1110 and with UE 1130. Hardware 1125 may include communication interface 1126 for setting up and maintaining a wired or wireless connection with an interface of a different communication device of communication system 1100, as well as radio interface 1127 for setting up and maintaining at least wireless connection 1170 with the wireless device 130, exemplified in Figure 11 as a UE 1130 located in a coverage area (not shown in Figure 11) served by base station 1120. Communication interface 1126 may be configured to facilitate connection 1160 to host computer 1110. Connection 1160 may be direct or it may pass through a core network (not shown in Figure 11) of the telecommunication system and/or through one or more intermediate networks outside the telecommunication system. In the embodiment shown, hardware 1125 of base station 1120 further includes processing circuitry 1128, which may comprise one or more programmable processors, application-specific integrated circuits, field programmable gate arrays or combinations of these (not shown) adapted to execute instructions. Base station 1120 further has software 1121 stored internally or accessible via an external connection.

Communication system 1100 further includes UE 1130 already referred to. Its hardware 1135 may include radio interface 1137 configured to set up and maintain wireless connection 1170 with a base station serving a coverage area in which UE 1130 is currently located. Hardware 1135 of UE 1130 further includes processing circuitry 1138, which may comprise one or more programmable processors, application-specific integrated circuits, field programmable gate arrays or combinations of these (not shown) adapted to execute instructions. UE 1130 further comprises software 1131, which is stored in or accessible by UE 1130 and executable by processing circuitry 1138. Software 1131 includes client application 1132. Client application 1132 may be operable to provide a service to a human or non-human user via UE 1130, with the support of host computer 1110. In host computer 1110, an executing host application 1112 may communicate with the executing client application 1132 via OTT connection 1150 terminating at UE 1130 and host computer 1110. In providing the service to the user, client application 1132 may receive request data from host application 1112 and provide user data in response to the request data. OTT connection 1150 may transfer both the request data and the user data. Client application 1132 may interact with the user to generate the user data that it provides.

It is noted that host computer 1110, base station 1120 and UE 1130 illustrated in Figure 11 may be similar or identical to host computer 1030, one of base stations 1012a, 1012b, 1012c and one of UEs 1091, 1092 of Figure 10, respectively. This is to say, the inner workings of these entities may be as shown in Figure 11 and independently, the surrounding network topology may be that of Figure 10.

In Figure 11, OTT connection 1150 has been drawn abstractly to illustrate the communication between host computer 1110 and UE 1130 via base station 1120, without explicit reference to any intermediary devices and the precise routing of messages via these devices. Network infrastructure may determine the routing, which it may be configured to hide from UE 1130 or from the service provider operating host computer 1110, or both. While OTT connection 1150 is active, the network infrastructure may further take decisions by which it dynamically changes the routing (e.g., on the basis of load balancing consideration or reconfiguration of the network).

Wireless connection 1170 between UE 1130 and base station 1120 is in accordance with the teachings of the embodiments described throughout this disclosure. One or more of the various embodiments improve the performance of OTT services provided to UE 1130 using OTT connection 1150, in which wireless connection 1170 forms the last segment. More precisely, the teachings of these embodiments may improve the latency, signalling overhead, and service interruption and thereby provide benefits such as reduced user waiting time, better responsiveness and extended battery lifetime.

A measurement procedure may be provided for the purpose of monitoring data rate, latency and other factors on which the one or more embodiments improve. There may further be an optional network functionality for reconfiguring OTT connection 1150 between host computer 1110 and UE 1130, in response to variations in the measurement results. The measurement procedure and/or the network functionality for reconfiguring OTT connection 1150 may be implemented in software 1111 and hardware 1115 of host computer 1110 or in software 1131 and hardware 1135 of UE 1130, or both. In embodiments, sensors (not shown) may be deployed in or in association with communication devices through which OTT connection 1150 passes; the sensors may participate in the measurement procedure by supplying values of the monitored quantities exemplified above, or supplying values of other physical quantities from which software 1111, 1131 may compute or estimate the monitored quantities. The reconfiguring of OTT connection 1150 may include message format, retransmission settings, preferred routing etc.; the reconfiguring need not affect base station 1120, and it may be unknown or imperceptible to base station 1120. Such procedures and functionalities may be known and practiced in the art. In certain embodiments, measurements may involve proprietary UE signaling facilitating host computer 1110's measurements of throughput, propagation times, latency and the like. The measurements may be implemented in that software 1111 and 1131 causes messages to be transmitted, in particular empty or 'dummy' messages, using OTT connection 1150 while it monitors propagation times, errors etc.

The wireless device 130 embodiments relate to **Figure 3**, **Figure 4****,** **Figure 6**, **Figure 7** and **Figures 10****-15**.

The wireless device 130 may comprise an interface unit to facilitate communications between the wireless device 130 and other nodes or devices, e.g., the first network node 111, the host computer 1110, or any of the other nodes. In some particular examples, the interface may, for example, include a transceiver configured to transmit and receive radio signals over an air interface in accordance with a suitable standard.

The wireless device 130 may also be configured to communicate user data with a host application unit in a host computer 1110, e.g., via another link such as 1160.

The wireless device 130 may comprise an arrangement as shown in Figure 8 or in Figure 11.

The first network node 111 embodiments relate to **Figure 3**, **Figure 5**, **Figure 6**, **Figure 7** and **Figures 10****-15**.

The first network node 111 may comprise an interface unit to facilitate communications between the first network node 111 and other nodes or devices, e.g., the wireless device 130, the second network node 112, the host computer 1110, or any of the other nodes. In some particular examples, the interface may, for example, include a transceiver configured to transmit and receive radio signals over an air interface in accordance with a suitable standard.

The first network node 111 may also be configured to communicate user data with a host application unit in a host computer 1110, e.g., via another link such as 1160.

The first network node 111 may comprise an arrangement as shown in Figure 9 or in Figure 11.

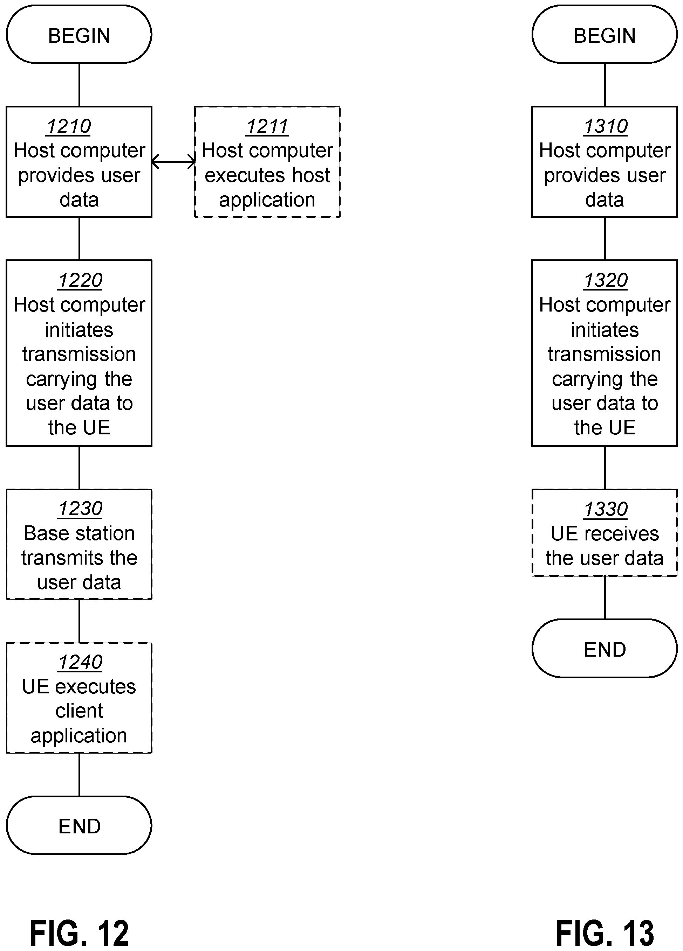

### Figure 12: Methods implemented in a communication system including a host computer, a base station and a user equipment in accordance with some embodiments

Figure 12 is a flowchart illustrating a method implemented in a communication system, in accordance with one embodiment. The communication system includes a host computer, a base station and a UE which may be those described with reference to Figures 10 and 11. For simplicity of the present disclosure, only drawing references to Figure 12 will be included in this section. In step 1210, the host computer provides user data. In substep 1211 (which may be optional) of step 1210, the host computer provides the user data by executing a host application. In step 1220, the host computer initiates a transmission carrying the user data to the UE. In step 1230 (which may be optional), the base station transmits to the UE the user data which was carried in the transmission that the host computer initiated, in accordance with the teachings of the embodiments described throughout this disclosure. In step 1240 (which may also be optional), the UE executes a client application associated with the host application executed by the host computer.

### Figure 13: Methods implemented in a communication system including a host computer, a base station and a user equipment in accordance with some embodiments

Figure 13 is a flowchart illustrating a method implemented in a communication system, in accordance with one embodiment. The communication system includes a host computer, a base station and a UE which may be those described with reference to Figures 10 and 11. For simplicity of the present disclosure, only drawing references to Figure 13 will be included in this section. In step 1310 of the method, the host computer provides user data. In an optional substep (not shown) the host computer provides the user data by executing a host application. In step 1320, the host computer initiates a transmission carrying the user data to the UE. The transmission may pass via the base station, in accordance with the teachings of the embodiments described throughout this disclosure. In step 1330 (which may be optional), the UE receives the user data carried in the transmission.

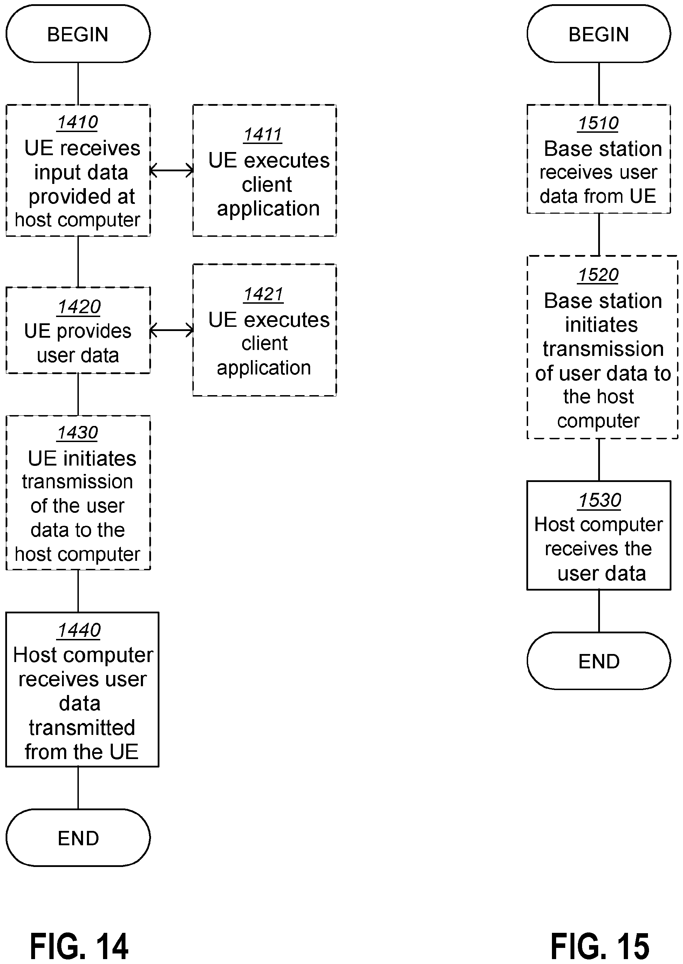

### Figure 14: Methods implemented in a communication system including a host computer, a base station and a user equipment in accordance with some embodiments

Figure 14 is a flowchart illustrating a method implemented in a communication system, in accordance with one embodiment. The communication system includes a host computer, a base station and a UE which may be those described with reference to Figures 10 and 11. For simplicity of the present disclosure, only drawing references to Figure 14 will be included in this section. In step 1410 (which may be optional), the UE receives input data provided by the host computer. Additionally or alternatively, in step 1420, the UE provides user data. In substep 1421 (which may be optional) of step 1420, the UE provides the user data by executing a client application. In substep 1411 (which may be optional) of step 1410, the UE executes a client application which provides the user data in reaction to the received input data provided by the host computer. In providing the user data, the executed client application may further consider user input received from the user. Regardless of the specific manner in which the user data was provided, the UE initiates, in substep 1430 (which may be optional), transmission of the user data to the host computer. In step 1440 of the method, the host computer receives the user data transmitted from the UE, in accordance with the teachings of the embodiments described throughout this disclosure.

### Figure 15: Methods implemented in a communication system including a host computer, a base station and a user equipment in accordance with some embodiments

Figure 15 is a flowchart illustrating a method implemented in a communication system, in accordance with one embodiment. The communication system includes a host computer, a base station and a UE which may be those described with reference to Figures 10 and 11. For simplicity of the present disclosure, only drawing references to Figure 15 will be included in this section. In step 1510 (which may be optional), in accordance with the teachings of the embodiments described throughout this disclosure, the base station receives user data from the UE. In step 1520 (which may be optional), the base station initiates transmission of the received user data to the host computer. In step 1530 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

## Claims

1. A method performed by a wireless device (130), the method being for handling uplink communication to a network node (111, 112), the wireless device (130) and the network node (111, 112) operating in a wireless communications network (100), the method comprising:
- *obtaining* (401) a configuration from a first network node (111), the configuration configuring the wireless device (130) with a set of uplink time-frequency resources to perform random access for data transmission in inactive mode, wherein a size of a buffer for the data transmission of the wireless device (130) is smaller than a threshold, wherein the set of uplink time-frequency resources are allocated in at least one second bandwidth part, BWP, the at least one second BWP being different from a first BWP already allocated to the wireless device (130),
wherein the obtaining (401) is in a first cell (121), wherein the wireless device (130) enters a second cell (122), and wherein the method further comprises:
- *determining* (403) whether or not the configuration applies in the second cell (122), and wherein at least one of:
(1) the wireless device (130) determines that the configuration is not to be applied in the second cell (122), and wherein the method further comprises:
- *refraining* (404) from using the configuration in the second cell (122), and
(2) the wireless device (130) determines that the configuration applies in the second cell (122), and wherein the method further comprises:
- *setting* (405) the second BWP as active BWP when a random access procedure is triggered for data transmission, wherein a size of a buffer for a further data transmission of the wireless device (130) is smaller than the threshold.

2. The method according to claim 1, wherein the obtaining (401) is while the wireless device (130) is in connected mode.

3. The method according to claim 2, wherein after the obtaining (401), the wireless device (130) is moved to inactive mode, and wherein the method further comprises:
- *saving* (402) the configuration in a UE context of the wireless device (130).

4. The method according to any of claims 1-3, wherein the obtaining (401) is in at one of:
- dedicated Radio Resource Control, RRC, signalling, and
- system information signalling.

5. The method according to claim 4, wherein the obtaining (401) is in system information, and wherein the configuration comprises an identifier of the configuration.

6. The method according to any of claims 1-5, wherein the configuration is a second configuration, wherein the wireless device (130) is unable, within a time period, to determine whether or not the second configuration applies in the second cell (122) within a time period, and wherein the method further comprises:
- *applying* (406) a first configuration in the second cell (122), wherein the first BWP is already allocated to the wireless device (130) in the first configuration.

7. The method according to any of claims 1-6, the method further comprising:
- *obtaining* (407) one or more indications from at least one of: the first network node (111) and a second network node (112) serving the second cell (122).

8. The method according to claim 7, wherein the configuration is a second configuration, wherein the determining (403) is based on at least a first indication, of the one or more indications, obtained from the second network node (112), the first indication setting one or more conditions to use the second configuration.

9. The method according to any of claims 1-8, wherein the method further comprises:
- *updating* (408) the set of uplink time-frequency resources to perform random access for data transmission in inactive mode based on at least one of:
i. a second indication received from the first network node (111), and
ii. one or more rules.

10. The method according to any of claims 1-9, wherein the configuration is a second configuration, wherein the second configuration has a different periodicity than the first configuration and comprises an offset with respect to a periodicity of the first configuration.

11. The method according to any of claims 1-10, wherein the at least one second BWP comprises a plurality of second BWPs, wherein the set of uplink time-frequency resources comprises different sub-sets of uplink time-frequency resources, and wherein each of the sub-sets of uplink time-frequency resources is allocated in a respective second BWP of the plurality of second BWPs.

12. A method performed by a first network node (111), the method being for handling uplink communication by a wireless device (130), the wireless device (130) and the first network node (111) operating in a wireless communications network (100), the method comprising:
- *providing* (502) a configuration to the wireless device (130), the configuration configuring the wireless device (130) with a set of uplink time-frequency resources to perform random access for data transmission in inactive mode, wherein a size of a buffer for the data transmission of the wireless device (130) is smaller than a threshold, wherein the set of uplink time-frequency resources are allocated in at least one second bandwidth part, BWP, the at least one second BWP being different from a first BWP already allocated to the wireless device (130), wherein the providing (502) is while the wireless device (130) is in connected mode, and wherein after the providing (502), the wireless device (130) is moved to inactive mode, and wherein the method further comprises:
- *saving* (503) the configuration in a UE context of the wireless device (130).

13. The method according to claim 12, wherein the providing (502) is in at one of:
- dedicated RRC signalling, and
- system information signalling.

14. The method according to claim 13, wherein the providing (502) is in system information, and wherein the configuration comprises an identifier of the configuration.

15. The method according to any of claims 12-14, e.g., wherein the providing (502) is in a first cell (121) served by the first network node (111).

16. The method according to any of claims 12-15, wherein the method further comprises:
- *determining* (501) the configuration.

17. The method according to any of claims 12-16, wherein the method further comprises:
- *updating* (504) the set of uplink time-frequency resources to perform random access for data transmission in inactive mode.

18. The method according to any of claims 12-17, the method further comprising:
- *providing* (505) one or more indications to the wireless device (130).

19. A wireless device (130), for handling uplink communication to a network node (111, 112), the wireless device (130) and the network node (111, 112) being configured to operate in a wireless communications network (100), the wireless device (130) being further configured to:
- obtain a configuration from a first network node (111), the configuration being configured to configure the wireless device (130) with a set of uplink time-frequency resources to perform random access for data transmission in inactive mode, wherein a size of a buffer for the data transmission of the wireless device (130) is configured to be smaller than a threshold, wherein the set of uplink time-frequency resources are configured to be allocated in at least one second bandwidth part, BWP, the at least one second BWP being configured to be different from a first BWP configured to be already allocated to the wireless device (130),
wherein the obtaining is in a first cell (121), and wherein the wireless device (130) is configured to, with the proviso that the wireless device (130) enters a second cell (122):
- determine whether or not the configuration applies in the second cell (122), wherein at least one of:
(3) the wireless device (130) is further configured to, with the proviso the wireless device (130) determines that the configuration is not to be applied in the second cell (122):
- refrain from using the configuration in the second cell (122), and
(4) the wireless device (130) is further configured to, with the proviso the wireless device (130) determines that the configuration applies in the second cell (122):
- set the second BWP as active BWP when a random access procedure is triggered for data transmission, wherein a size of a buffer for a further data transmission of the wireless device (130) is configured to be smaller than the threshold.

20. The wireless device (130) according to claim 19, wherein the wireless device is further adapted to perform the method of any of claims 2-11

21. A first network node (111), for handling uplink communication by a wireless device (130), the wireless device (130) and the first network node (111) being configured to operate in a wireless communications network (100), the first network node (111) being further configured to:
- provide a configuration to the wireless device (130), the configuration being configured to configure the wireless device (130) with a set of uplink time-frequency resources to perform random access for data transmission in inactive mode, wherein a size of a buffer for the data transmission of the wireless device (130) is configured to be smaller than a threshold, wherein the set of uplink time-frequency resources are configured to be allocated in at least one second bandwidth part, BWP, the at least one second BWP being configured to be different from a first BWP configured to be already allocated to the wireless device (130), wherein the providing is configured to be while the wireless device (130) is in connected mode, and wherein the first network node (111) is further configured to, with the proviso that after the providing, the wireless device (130) is moved to inactive mode:
- save the configuration in a UE context of the wireless device (130).

22. The first network node (111) according to claim 21, wherein the first network node is further adapted to perform any of claims 13-18

## Patentansprüche

1. Verfahren, das von einer drahtlosen Vorrichtung (130) durchgeführt wird, wobei das Verfahren zur Handhabung von Uplink-Kommunikation an einen Netzwerkknoten (111, 112) ist, die drahtlose Vorrichtung (130) und der Netzwerkknoten (111, 112) in einem Drahtloskommunikationsnetzwerk (100) operieren und das Verfahren umfasst:
- Erhalten (401) einer Konfiguration von einem ersten Netzwerkknoten (111), wobei die Konfiguration die drahtlose Vorrichtung (130) mit einem Satz von Uplink-Zeit-Frequenz-Ressourcen konfiguriert, um Direktzugriff für Datenübertragung in einem inaktiven Modus durchzuführen, wobei eine Größe eines Puffers für die Datenübertragung der drahtlosen Vorrichtung (130) kleiner als eine Schwelle ist, wobei der Satz von Uplink-Zeit-Frequenz-Ressourcen in mindestens einem zweiten Bandbreitenteil, BWP, zugewiesen wird, wobei der mindestens eine zweite BWP sich von einem der drahtlosen Vorrichtung (130) bereits zugewiesenen ersten BWP unterscheidet,
wobei das Erhalten (401) in einer ersten Zelle (121) erfolgt, wobei die erste drahtlose Vorrichtung (130) in eine zweite Zelle (122) eintritt, und wobei das Verfahren ferner umfasst:
- Bestimmen (403), ob die Konfiguration in der zweiten Zelle (122) gilt oder nicht, und wobei mindestens eines von Folgendem:
(1) die drahtlose Vorrichtung (130) bestimmt, dass die Konfiguration in der zweiten Zelle (122) nicht angewendet werden soll, und wobei das Verfahren ferner umfasst:
- Unterlassen (404) des Verwendens der Konfiguration in der zweiten Zelle (122), und
(2) die drahtlose Vorrichtung (130) bestimmt, dass die Konfiguration in der zweiten Zelle (122) gilt, und wobei das Verfahren ferner umfasst:
- Festlegen (405) des zweiten BWP als aktiven BWP, wenn eine Direktzugriffsprozedur für Datenübertragung ausgelöst wird, wobei eine Größe eines Puffers für eine weitere Datenübertragung der drahtlosen Vorrichtung (130) kleiner als die Schwelle ist.

2. Verfahren nach Anspruch 1, wobei das Erhalten (401) erfolgt, während die drahtlose Vorrichtung (130) in einem verbundenen Modus ist.

3. Verfahren nach Anspruch 2, wobei die drahtlose Vorrichtung (130) nach dem Erhalten (401) in einen inaktiven Modus versetzt wird, und wobei das Verfahren ferner umfasst:
- Speichern (402) der Konfiguration in einem UE-Kontext der drahtlosen Vorrichtung (130).

4. Verfahren nach einem der Ansprüche 1 bis 3, wobei das Erhalten (401) bei einer erfolgt von:
- dedizierter Funkressourcensteuerungs-,RRC-Signalisierung und
- Systeminformationssignalisierung.

5. Verfahren nach Anspruch 4, wobei das Erhalten (401) in Systeminformationen erfolgt, und wobei die Konfiguration eine Kennung der Konfiguration umfasst.

6. Verfahren nach einem der Ansprüche 1 bis 5, wobei die Konfiguration eine zweite Konfiguration ist, wobei die drahtlose Vorrichtung (130) nicht in der Lage ist, innerhalb eines Zeitraums zu bestimmen, ob die zweite Konfiguration in der zweiten Zelle (122) innerhalb eines Zeitraums gilt oder nicht, und wobei das Verfahren ferner umfasst:
- Anwenden (406) einer ersten Konfiguration in der zweiten Zelle (122), wobei der erste BWP der drahtlosen Vorrichtung (130) bereits in der ersten Konfiguration zugewiesen ist.

7. Verfahren nach einem der Ansprüche 1 bis 6, wobei das Verfahren ferner umfasst:
- Erhalten (407) einer oder mehrerer Anzeigen von mindestens einem von: dem ersten Netzwerkknoten (111) und einem zweiten Netzwerkknoten (112), der die zweite Zelle (122) bedient.

8. Verfahren nach Anspruch 7, wobei die Konfiguration eine zweite Konfiguration ist, wobei das Bestimmen (403) auf mindestens einer ersten Anzeige der einen oder der mehreren Anzeigen basiert, die vom zweiten Netzwerkknoten (112) empfangen werden, wobei die erste Anzeige eine oder mehrere Bedingungen zum Verwenden der zweiten Konfiguration festlegt.

9. Verfahren nach einem der Ansprüche 1 bis 8, wobei das Verfahren ferner umfasst, dass:
- Aktualisieren (408) des Satzes von Uplink-Zeit-Frequenz-Ressource zum Durchführen von Direktzugriff für Datenübertragung in einem inaktiven Modus basierend auf mindestens einer von:
i. einer zweiten Anzeige, die vom ersten Netzwerkknoten (111) empfangen wird, und
ii. einer oder mehreren Regeln.

10. Verfahren nach einem der Ansprüche 1 bis 9, wobei die Konfiguration eine zweite Konfiguration ist, wobei die zweite Konfiguration eine andere Periodizität als die erste Konfiguration aufweist und einen Offset in Bezug auf eine Periodizität der ersten Konfiguration umfasst.

11. Verfahren nach einem der Ansprüche 1 bis 10, wobei der mindestens eine zweite BWP eine Mehrzahl von zweiten BWPs umfasst, wobei der Satz von Uplink-Zeit-Frequenz-Ressourcen verschiedene Teilmengen von Uplink-Zeit-Frequenz-Ressourcen umfasst und wobei jede der Teilmengen von Uplink-Zeit-Frequenz-Ressourcen in einem jeweiligen zweiten BWP der Mehrzahl von zweiten BWPs zugewiesen wird.

12. Verfahren, das von ersten Netzwerkknoten (111) durchgeführt wird, wobei das Verfahren zur Handhabung von Uplink-Kommunikation durch eine drahtlose Vorrichtung (130) ist, die drahtlose Vorrichtung (130) und der erste Netzwerkknoten (111) in einem Drahtloskommunikationsnetzwerk (100) operieren und das Verfahren umfasst:
- Bereitstellen (502) einer Konfiguration für die drahtlose Vorrichtung (130), wobei die Konfiguration die drahtlose Vorrichtung (130) mit einem Satz von Uplink-Zeit-Frequenz-Ressourcen konfiguriert, um Direktzugriff für Datenübertragung in einem inaktiven Modus durchzuführen, wobei eine Größe eines Puffers für die Datenübertragung der drahtlosen Vorrichtung (130) kleiner als eine Schwelle ist, wobei der Satz von Uplink-Zeit-Frequenz-Ressourcen in mindestens einem zweiten Bandbreitenteil, BWP, zugewiesen wird, wobei der mindestens eine zweite BWP sich von einem der drahtlose Vorrichtung (130) bereits zugewiesenen ersten BWP unterscheidet, wobei das Bereitstellen (502) erfolgt, während die drahtlose Vorrichtung (130) in einem verbundenen Modus ist, und wobei die drahtlose Vorrichtung (130) nach dem Bereitstellen (502) in einen inaktiven Modus versetzt wird, und wobei das Verfahren ferner umfasst:
- Speichern (503) der Konfiguration in einem UE-Kontext der drahtlosen Vorrichtung (130).

13. Verfahren nach Anspruch 12, wobei das Bereitstellen (502) bei einer erfolgt von:
- dedizierter RRC-Signalisierung und
- Systeminformationssignalisierung.

14. Verfahren nach Anspruch 13, wobei das Bereitstellen (502) in Systeminformationen erfolgt, und wobei die Konfiguration eine Kennung der Konfiguration umfasst.

15. Verfahren nach einem der Ansprüche 12 bis 14, z. B., wobei das Bereitstellen (502) in einer ersten Zelle (121) erfolgt, die vom ersten Netzwerkknoten (111) bedient wird.

16. Verfahren nach einem der Ansprüche 12 bis 15, wobei das Verfahren ferner umfasst:
- Bestimmen (501) der Konfiguration.

17. Verfahren nach einem der Ansprüche 12 bis 16, wobei das Verfahren ferner umfasst:
- Aktualisieren (504) des Satzes von Uplink-Zeit-Frequenz-Ressource zum Durchführen von Direktzugriff für Datenübertragung in einem inaktiven Modus.

18. Verfahren nach einem der Ansprüche 12 bis 17, wobei das Verfahren ferner umfasst:
- Bereitstellen (505) einer oder mehrerer Anzeigen für die drahtlose Vorrichtung (130).

19. Drahtlose Vorrichtung (130) zum Handhaben einer Konfiguration an einen Netzwerkknoten (111, 112), wobei die drahtlose Vorrichtung (130) und der Netzwerkknoten (111, 112) so konfiguriert sind, dass sie in einem Drahtloskommunikationsnetzwerk (100) operieren, wobei die drahtlose Vorrichtung (130) ferner konfiguriert ist zum:
- Erhalten einer Konfiguration von einem ersten Netzwerkknoten (111), wobei die Konfiguration zum Konfigurieren der drahtlosen Vorrichtung (130) mit einem Satz von Uplink-Zeit-Frequenz-Ressourcen konfiguriert ist, um Direktzugriff für Datenübertragung in einem inaktiven Modus durchzuführen, wobei eine Größe eines Puffers für die Datenübertragung der drahtlosen Vorrichtung (130) so konfiguriert ist, dass sie kleiner als eine Schwelle ist, wobei der Satz von Uplink-Zeit-Frequenz-Ressourcen so konfiguriert ist, dass er in mindestens einem Bandbreitenteil, BWP, zugewiesen wird, wobei der mindestens eine zweite BWP so konfiguriert ist, dass er sich von einem der drahtlosen Vorrichtung (130) bereits zugewiesenen ersten BWP unterscheidet,
wobei das Erhalten in einer ersten Zelle (121) erfolgt, und wobei die drahtlose Vorrichtung (130) unter der Voraussetzung, dass die drahtlose Vorrichtung (130) in eine zweite Zelle (122) eintritt, konfiguriert ist zum:
- Bestimmen, ob die Konfiguration in der zweiten Zelle (122) gilt oder nicht, wobei mindestens eines von Folgendem:
(3) die drahtlose Vorrichtung (130) ist unter der Voraussetzung, dass die drahtlose Vorrichtung (130) bestimmt, dass die Konfiguration in der zweiten Zelle (122) nicht angewendet werden soll, konfiguriert zum:
- Unterlassen des Verwendens der Konfiguration in der zweiten Zelle (122), und
(4) die drahtlose Vorrichtung (130) ist unter der Voraussetzung, dass die drahtlose Vorrichtung (130) bestimmt, dass die Konfiguration in der zweiten Zelle (122) gilt, konfiguriert zum:
- Festlegen des zweiten BWP als aktiven BWP, wenn eine Direktzugriffsprozedur für Datenübertragung ausgelöst wird, wobei eine Größe eines Puffers für eine weitere Datenübertragung der drahtlosen Vorrichtung (130) so konfiguriert ist, dass sie kleiner als die Schwelle ist.

20. Drahtlose Vorrichtung (130) nach Anspruch 19, wobei die drahtlose Vorrichtung ferner zum Durchführen des Verfahrens nach einem der Ansprüche 2 bis 11 ausgelegt ist.

21. Erster Netzwerkknoten (111) zum Handhaben von Uplink-Kommunikation durch eine drahtlose Vorrichtung (130), wobei die erste drahtlose Vorrichtung (130) und der erste Netzwerkknoten (111) so konfiguriert sind, dass sie in einem Drahtloskommunikationsnetzwerk (100) operieren und der Netzwerkknoten (111) ferner konfiguriert ist zum:
- Bereitstellen einer Konfiguration für die drahtlose Vorrichtung (130), wobei die Konfiguration zum Konfigurieren der drahtlosen Vorrichtung (130) mit einem Satz von Uplink-Zeit-Frequenz-Ressourcen konfiguriert ist, um Direktzugriff für Datenübertragung in einem inaktiven Modus durchzuführen, wobei eine Größe eines Puffers für die Datenübertragung der drahtlosen Vorrichtung (130) so konfiguriert ist, dass sie kleiner als eine Schwelle ist, wobei der Satz von Uplink-Zeit-Frequenz-Ressourcen so konfiguriert ist, dass er in mindestens einem zweiten Bandbreitenteil, BWP, zugewiesen wird, wobei der mindestens eine zweite BWP so konfiguriert ist, dass er sich von einem der drahtlosen Vorrichtung (130) bereits zugewiesenen ersten BWP unterscheidet, wobei das Bereitstellen so konfiguriert ist, dass es erfolgt, während die drahtlose Vorrichtung (130) in einem verbundenen Modus ist, und wobei der erste Netzwerkknoten (111) unter der Voraussetzung, dass die drahtlose Vorrichtung (130) nach dem Bereitstellen in einen inaktiven Modus versetzt wird, ferner konfiguriert ist zum:
- Speichern der Konfiguration in einem UE-Kontext der drahtlosen Vorrichtung (130).

22. Erster Netzwerkknoten (111) nach Anspruch 21, wobei der erste Netzwerkknoten ferner zum Durchführen des Verfahrens nach einem der Ansprüche 13 bis 18 ausgelegt ist.

## Revendications

1. Procédé réalisé par un dispositif sans fil (130), le procédé étant destiné à gérer une communication de liaison montante vers un noeud de réseau (111, 112), le dispositif sans fil (130) et le noeud de réseau (111, 112) fonctionnant dans un réseau de communication sans fil (100), le procédé comprenant :
- l'obtention (401) d'une configuration depuis un premier noeud de réseau (111), la configuration configurant le dispositif sans fil (130) avec un ensemble de ressources de temps-fréquence de liaison montante pour réaliser un accès aléatoire pour une transmission de données dans un mode inactif, dans lequel une taille d'une mémoire tampon pour la transmission de données du dispositif sans fil (130) est inférieure à un seuil, dans lequel l'ensemble de ressources de temps-fréquence de liaison montante est alloué dans au moins une deuxième partie de bande passante, BWP, l'au moins une deuxième BWP étant différente d'une première BWP déjà allouée au dispositif sans fil (130),
dans lequel l'obtention (401) est dans une première cellule (121), dans lequel le dispositif sans fil (130) entre dans une deuxième cellule (122), et dans lequel le procédé comprend en outre :
- la détermination (403) si la configuration s'applique ou non dans la deuxième cellule (122), et dans lequel au moins l'un de ce qui suit se vérifie :
(1) le dispositif sans fil (130) détermine que la configuration ne doit pas être appliquée dans la deuxième cellule (122), et dans lequel le procédé comprend en outre :
- l'interdiction (404) d'utiliser la configuration dans la deuxième cellule (122), et
(2) le dispositif sans fil (130) détermine que la configuration s'applique dans la deuxième cellule (122), et dans lequel le procédé comprend en outre :
- le réglage (405) de la deuxième BWP en tant que BWP active lorsqu'une procédure d'accès aléatoire est déclenchée pour une transmission de données, dans lequel une taille d'une mémoire tampon pour une autre transmission de données du dispositif sans fil (130) est inférieure au seuil.

2. Procédé selon la revendication 1, dans lequel l'obtention (401) est pendant que le dispositif sans fil (130) est dans un mode connecté.

3. Procédé selon la revendication 2, dans lequel, après l'obtention (401), le dispositif sans fil (130) est mis dans un mode inactif, et dans lequel le procédé comprend en outre :
- l'enregistrement (402) de la configuration dans un contexte UE du dispositif sans fil (130).

4. Procédé selon l'une quelconque des revendications 1 à 3, dans lequel l'obtention (401) est dans au moins l'une parmi :
- une signalisation de commande de ressources radio, RRC, dédiée, et
- une signalisation d'informations système.

5. Procédé selon la revendication 4, dans lequel l'obtention (401) est dans des informations système, et dans lequel la configuration comprend un identifiant de la configuration.

6. Procédé selon l'une quelconque des revendications 1 à 5, dans lequel la configuration est une deuxième configuration, dans lequel le dispositif sans fil (130) est incapable, au cours d'une période de temps, de déterminer si la deuxième configuration s'applique ou non dans la deuxième cellule (122) au cours d'une période de temps, et dans lequel le procédé comprend en outre :
- l'application (406) d'une première configuration dans la deuxième cellule (122), dans lequel la première BWP est déjà allouée au dispositif sans fil (130) dans la première configuration.

7. Procédé selon l'une quelconque des revendications 1 à 6, le procédé comprenant en outre :
- l'obtention (407) d'une ou plusieurs indications depuis au moins l'un parmi : le premier noeud de réseau (111) et un deuxième noeud de réseau (112) desservant la deuxième cellule (122).

8. Procédé selon la revendication 7, dans lequel la configuration est une deuxième configuration, dans lequel la détermination (403) est basée sur au moins une première indication, parmi les une ou plusieurs indications, obtenue depuis le deuxième noeud de réseau (112), la première indication réglant une ou plusieurs conditions pour utiliser la deuxième configuration.

9. Procédé selon l'une quelconque des revendications 1 à 8, dans lequel le procédé comprend en outre :
- la mise à jour (408) de l'ensemble de ressources de temps-fréquence de liaison montante pour réaliser un accès aléatoire pour une transmission de données dans un mode inactif sur la base d'au moins l'une de ce qui suit :
i. une deuxième indication reçue depuis le premier noeud de réseau (111), et
ii. une ou plusieurs règles.

10. Procédé selon l'une quelconque des revendications 1 à 9, dans lequel la configuration est une deuxième configuration, dans lequel la deuxième configuration a une périodicité différente de celle de la première configuration et comprend un décalage par rapport à une périodicité de la première configuration.

11. Procédé selon l'une quelconque des revendications 1 à 10, dans lequel l'au moins une deuxième BWP comprend une pluralité de deuxièmes BWP, dans lequel l'ensemble de ressources de temps-fréquence de liaison montante comprend différents sous-ensembles de ressources de temps-fréquence de liaison montante, et dans lequel chacun des sous-ensembles de ressources de temps-fréquence de liaison montante est alloué dans une deuxième BWP respective parmi la pluralité de deuxièmes BWP.

12. Procédé réalisé par un premier noeud de réseau (111), le procédé étant destiné à gérer une communication de liaison montante par un dispositif sans fil (130), le dispositif sans fil (130) et le premier noeud de réseau (111) fonctionnant dans un réseau de communication sans fil (100), le procédé comprenant :
- la fourniture (502) d'une configuration au dispositif sans fil (130), la configuration configurant le dispositif sans fil (130) avec un ensemble de ressources de temps-fréquence de liaison montante pour réaliser un accès aléatoire pour une transmission de données dans un mode inactif, dans lequel une taille d'une mémoire tampon pour la transmission de données du dispositif sans fil (130) est inférieure à un seuil, dans lequel l'ensemble de ressources de temps-fréquence de liaison montante est alloué dans au moins une deuxième partie de bande passante, BWP, l'au moins une deuxième BWP étant différente d'une première BWP déjà allouée au dispositif sans fil (130), dans lequel la fourniture (502) est pendant que le dispositif sans fil (130) est dans un mode connecté, et dans lequel, après la fourniture (502), le dispositif sans fil (130) est mis dans un mode inactif, et dans lequel le procédé comprend en outre :
- l'enregistrement (503) de la configuration dans un contexte UE du dispositif sans fil (130).

13. Procédé selon la revendication 12, dans lequel la fourniture (502) est dans au moins l'une parmi :
- une signalisation RRC dédiée, et
- une signalisation d'informations système.

14. Procédé selon la revendication 13, dans lequel la fourniture (502) est dans des informations système, et dans lequel la configuration comprend un identifiant de la configuration.

15. Procédé selon l'une quelconque des revendications 12 à 14, par exemple, dans lequel la fourniture (502) est dans une première cellule (121) desservie par le premier noeud de réseau (111).

16. Procédé selon l'une quelconque des revendications 12 à 15, dans lequel le procédé comprend en outre :
- la détermination (501) de la configuration.

17. Procédé selon l'une quelconque des revendications 12 à 16, dans lequel le procédé comprend en outre :
- la mise à jour (504) de l'ensemble de ressources de temps-fréquence de liaison montante pour réaliser un accès aléatoire pour une transmission de données dans un mode inactif.

18. Procédé selon l'une quelconque des revendications 12 à 17, le procédé comprenant en outre :
- la fourniture (500) d'une ou plusieurs indications au dispositif sans fil (130).

19. Dispositif sans fil (130), destiné à gérer une communication de liaison montante vers un noeud de réseau (111, 112), le dispositif sans fil (130) et le noeud de réseau (111, 112) étant configurés pour fonctionner dans un réseau de communication sans fil (100), le dispositif sans fil (130) étant en outre configuré pour :
- obtenir une configuration depuis un premier noeud de réseau (111), la configuration étant configurée pour configurer le dispositif sans fil (130) avec un ensemble de ressources de temps-fréquence de liaison montante pour réaliser un accès aléatoire pour une transmission de données dans un mode inactif, dans lequel une taille d'une mémoire tampon pour la transmission de données du dispositif sans fil (130) est configurée pour être inférieure à un seuil, dans lequel l'ensemble de ressources de temps-fréquence de liaison montante est configuré pour être alloué dans au moins une deuxième partie de bande passante, BWP, l'au moins une deuxième BWP étant configurée pour être différente d'une première BWP configurée pour être déjà allouée au dispositif sans fil (130),
dans lequel l'obtention est dans une première cellule (121), dans lequel le dispositif sans fil (130) est configuré pour, à condition que le dispositif sans fil entre dans une deuxième cellule (122) :
- déterminer si la configuration s'applique ou non dans la deuxième cellule (122), dans lequel au moins l'un de ce qui suit se vérifie :
(3) le dispositif sans fil (130) est en outre configuré pour, à condition que le dispositif sans fil (130) détermine que la configuration ne doit pas être appliquée dans la deuxième cellule (122) :
- interdire d'utiliser la configuration dans la deuxième cellule (122), et
(4) le dispositif sans fil (130) est en outre configuré pour, à condition que le dispositif sans fil (130) détermine que la configuration s'applique dans la deuxième cellule (122) :
- régler la deuxième BWP en tant que BWP active lorsqu'une procédure d'accès aléatoire est déclenchée pour une transmission de données, dans lequel une taille d'une mémoire tampon pour une autre transmission de données du dispositif sans fil (130) est configurée pour être inférieure au seuil.

20. Dispositif sans fil (130) selon la revendication 19, dans lequel le dispositif sans fil est en outre apte à réaliser le procédé selon l'une quelconque des revendications 2 à 11.

21. Premier noeud de réseau (111), destiné à gérer une communication de liaison montante par un dispositif sans fil (130), le dispositif sans fil (130) et le premier noeud de réseau (111) étant configurés pour fonctionner dans un réseau de communication sans fil (100), le premier noeud de réseau (111) étant en outre configuré pour :
- fournir une configuration au dispositif sans fil (130), la configuration étant configurée pour configurer le dispositif sans fil (130) avec un ensemble de ressources de temps-fréquence de liaison montante pour réaliser un accès aléatoire pour une transmission de données dans un mode inactif, dans lequel une taille d'une mémoire tampon pour la transmission de données du dispositif sans fil (130) est configurée pour être inférieure à un seuil, dans lequel l'ensemble de ressources de temps-fréquence de liaison montante est configuré pour être alloué dans au moins une deuxième partie de bande passante, BWP, l'au moins une deuxième BWP étant configurée pour être différente d'une première BWP configurée pour être déjà allouée au dispositif sans fil (130), dans lequel la fourniture est configurée pour être pendant que le dispositif sans fil (130) est dans un mode connecté, et dans lequel le premier noeud de réseau (111) est en outre configuré pour, à condition que, après la fourniture, le dispositif sans fil (130) soit mis dans un mode inactif :
- enregistrer la configuration dans un contexte UE du dispositif sans fil (130).

22. Premier noeud de réseau (111) selon la revendication 21, dans lequel le premier noeud de réseau est en outre apte à réaliser le procédé selon l'une quelconque des revendications 13 à 18.
